# EUROPÄISCHE PATENTSCHRIFT

(11) **EP 4 345 556 B1**
(45) Veröffentlichungstag und Bekanntmachung des Hinweises auf die Patenterteilung: **11.12.2024**
(21) Anmeldenummer: 22205899.2
(22) Anmeldetag: 07.11.2022
(51) Int. Cl.: G05B 19/418

(54) **VERFAHREN FÜR EINE COMPUTER-GESTÜTZTE INSTALLATION VON RÄUMLICH DEZENTRAL ANGEORDNETEN KOMPONENTEN EINER MASCHINE**
METHOD FOR COMPUTER-ASSISTED INSTALLATION OF COMPONENTS OF A MACHINE ARRANGED IN A SPATIALLY DECENTRALISED MANNER
PROCÉDÉ D'INSTALLATION ASSISTÉE PAR ORDINATEUR DE COMPOSANTS AGENCÉS DE MANIÈRE DÉCENTRALISÉE DANS L'ESPACE D'UNE MACHINE

(30) Priorität: 30.09.2022 EP 22199162
(43) Veröffentlichungstag der Anmeldung: 03.04.2024
(73) Patentinhaber: Murrelektronik GmbH, 71570 Oppenweiler (DE)
(72) Erfinder: Pfestorf, Sebastian, 71570 Oppenweiler (DE); Zeller, Paul, 74223 Flein (DE)
(74) Vertreter: Bösherz Goebel Patentanwälte

(56) Entgegenhaltungen:
- EP-A1- 3 244 286
- WO-A1-2017/191059
- WO-A1-2022/020787
- US-A1- 2015 227 943

## Beschreibung

### Technisches Gebiet

Die vorliegende Erfindung betrifft allgemein das Gebiet der Planung und Montage von Maschinen wie Automatisierungsanlagen, und insbesondere eine computer-gestützte Installation von räumlich dezentral angeordneten Komponenten einer Maschine.

### Hintergrund

Die Komplexität und Vielfalt von Automatisierungsanlagen, die entwickelt, geplant, installiert, gewartet, und repariert werden müssen, wird immer größer. In allen Phasen des Lebenszyklus einer solchen Anlage wie der Entwicklung/Planung, Produktion, Inbetriebsetzung, Betrieb und Wartung wird eine effiziente und effektive Unterstützung für einen Installateur oder Planer durch eine umfangreiche und vor allem vollständige Dokumentation immer wichtiger. Diesem Anspruch wird die in der Praxis vorliegende Dokumentation, beispielsweise in Form von Schaltplänen, allerdings nicht immer gerecht, da durch schlecht aufeinander abgestimmte Arbeitsprozesse oder durch die Verwendung von schlecht aufeinander abgestimmten Dokumentationstools Installationsaktivitäten nicht ausreichend oder nicht vollständig eingetragen werden. Diese bekannten Umstände führen zwangsläufig zu Dokumentationslücken in der Anlagendokumentation, was eine zuverlässige Wartung oder Reparatur einer Anlage erschwert bzw. im schlimmsten Fall unmöglich macht. Es ist daher eine Aufgabe, die der Erfindung zugrunde liegt, ein computer-gestütztes Verfahren und ein System bereitzustellen, um eine einfachere, schnellere, sichere und fehlerfreie Installation von Komponenten zu ermöglichen und dabei die oben genannten Nachteile des Standes der Technik zumindest teilweise zu überwinden. EP 3 244 286 A1 beschreibt ein computer-implementiertes Verfahren zur Installation eines ersten physischen Elements, das den Empfang von Angaben zu physischen Elementen und die Projektion eines dem ersten physischen Element entsprechenden Bildes auf oder in ein zweites physisches Element durch ein Augmented-Reality-System umfasst. WO 2022/020787 A1 offenbart eine iterativ geleitete Demontage und Montage für ein elektrisches Gerät (Schaltschrank). WO 2017/191059 A1 offenbart ein System zum Rekonfigurieren eines Schaltschranks, das eine Erkennungseinheit zum Erkennen von Funktionseinheiten einer elektrischen Schaltung, die innerhalb des Schaltschranks montiert ist, und eine Ausgabeeinheit zum Ausgeben ermittelter Ersatzfunktionseinheiten umfasst.

### Beschreibung der Erfindung

Die voranstehende Aufgabe wird gelöst durch ein Verfahren, Computerprogramm sowie eine Vorrichtung zur Datenverarbeitung gemäß den unabhängigen Patentansprüchen.

Weitere Merkmale und Details der Erfindung ergeben sich aus den jeweiligen Unteransprüchen, der Beschreibung und den Zeichnungen.

Gegenstand der Erfindung ist ein Verfahren für eine computer-gestützte Installation von räumlich dezentral angeordneten Komponenten einer Maschine.

Die Maschine kann als wenigstens eine der nachfolgend genannten Maschinen ausgebildet sein:
- Eine Automatisierungsanlage,
- Eine Produktionsanlage,
- Eine Logistikanlage,
- Eine Produktionsstraße,
- Ein Bearbeitungszentrum,
- Ein Industrieroboter,
- Eine Fertigungsanlage,
- Ein Aggregat,
- Ein Elektrogerät.

Insbesondere kann die Maschine dabei als eine Maschine mit modularem Charakter oder auch als mobile oder bewegliche Maschine ausgebildet sein, bei welcher einzelne Teile der Maschine modular gemäß einer Installationsvorgabe installiert werden. Diese Installation erfolgt zumindest teilweise manuell durch einen Benutzer wie einem Werker.

Die Komponenten, insbesondere die elektrischen Komponenten, können Installationselemente wie Kabel und/oder Steckverbinder umfassen. Ferner können die Komponenten, insbesondere die elektrischen Komponenten, Module wie Verbindungsmodule umfassen, wobei die Verbindungsmodule eine dezentrale und modulare Verbindung von Installationselementen ermöglichen können. Dezentral kann sich dabei darauf beziehen, dass die Verbindungsmodule zumindest teilweise einen zentralen Schaltschrank ersetzen, indem die Verbindungsmodule zwar jeweils nur einen Teil der Verbindungen für die Maschine bereitstellen, diese Verbindungen aber dezentral im Feld ermöglichen. Bei einer zentralen Topologie, also bspw. einem zentralisierten Schaltschrankkonzept, wird insbesondere von einer Punkt-zu-Punkt-Verbindung gesprochen, d.h. der Startpunkt, die Verbindung und der Endpunkt sind klar definiert. Im Gegensatz dazu ist es bei dezentralen Anwendungen möglich, bzw. kann sogar oftmals notwendig sein, zwischen dem Startpunkt und dem Endpunkt mehrere Komponenten anzuordnen oder zu verbinden. In diesem Fall kann z. B. von einer Modul-Modul oder Modul-Hub-Punkt-Verbindung gesprochen werden.

Grundsätzlich können bei einer Maschine bspw. die folgenden Komponenten vorgesehen sein: Geräte wie Aktoren und/oder Sensoren, die Verbindungsmodule, Installationselemente, bspw. zur Verkabelung. Entsprechend können die Komponenten auch als Installationselemente ausgeführt sein.

Das erfindungsgemäße Verfahren kann dabei die nachfolgenden Schritte umfassen, welche vorzugsweise nacheinander oder in beliebiger Reihenfolge ausgeführt werden, wobei die Schritte auch automatisiert und/oder wiederholt ausgeführt werden können:
- Empfangen eines Identifikators einer Komponente,
- Bereitstellen einer Installationsvorgabe, welche eine Zuordnung der Komponente zu einem oder mehreren Installationsorten, der Maschine spezifiziert,
- Identifizieren wenigstens eines Installationsvorschlags für die Installation der Komponente auf Basis der bereitgestellten Installationsvorgabe und des empfangenen Identifikators, wobei vorzugsweise der Installationsort oder die mehreren Installationsorte auf Basis einer Auswertung, ausgewählt werden, wobei durch den wenigstens einen Installationsvorschlag der ausgewählte Installationsort oder die mehreren ausgewählten Installationsorte angegeben werden, und
- Initiieren einer Ausgabe wenigstens einer Installationsinformation basierend auf dem wenigstens einen identifizierten Installationsvorschlag,
wobei das Identifizieren des wenigstens einen Installationsvorschlags die nachfolgenden Schritte umfasst:
Ermitteln wenigstens einer technischen Eigenschaft der Komponente auf Basis des empfangenen Identifikators;
Ermitteln wenigstens einer technischen Anforderung des wenigstens einen Installationsorts an die Komponente auf Basis der bereitgestellten Installationsvorgabe;
Durchführen der Auswertung, bei welcher abgeglichen wird, ob für den jeweiligen Installationsort die wenigstens eine technische Eigenschaft der Komponente die wenigstens eine technische Anforderung erfüllt;
Auswählen des oder derjenigen Installationsorte, für welche die Erfüllung der Anforderung festgestellt wird.

Damit ermöglicht das Verfahren eine einfachere, schnellere und fehlerfreie Zuordnung von Komponenten und kann damit einen Benutzer für die Installation der Maschine wesentlich unterstützen und den Prozess vereinfachen. Ferner kann auf diese Weise ein Unterstützungssystem zur Installation, insbesondere zur Installation von Komponenten, räumlich direkt an der Maschine und/oder an Maschinenteilen zur geführten Orientierung des Benutzers bereitgestellt werden. Es ist möglich, dass eine Datenverarbeitungsvorrichtung die Verfahrensschritte automatisiert ausführen kann. Die Datenverarbeitungsvorrichtung, insbesondere eine erfindungsgemäße Vorrichtung zur Datenverarbeitung, kann dabei vorteilhafterweise mit einzelnen Komponenten kommunizieren, um bspw. den Identifikator zu empfangen und/oder die Ausgabe zu initiieren und/oder die Installation zu überprüfen und/oder einen Verbindungszustand zu ermitteln. Hierzu kann die Datenverarbeitungsvorrichtung wenigstens eine Schnittstelle für die Kommunikation aufweisen.

Ein Benutzer kann bspw. ein Installateur und/oder Anlagenmechaniker und/oder Elektriker und/oder Werker und/oder Planer und/oder mechanischer Konstrukteur oder Entwickler und/oder elektrischer Konstrukteur oder Entwickler und/oder SPS-Programmierer und/oder Inbetriebnehmer und/oder Instandhalter und/oder Maschinenführer sein. Es ist möglich, dass der Benutzer das erfindungsgemäße Verfahren dadurch verwendet, dass das Verfahren und vorzugsweise die Ausgabe zumindest teilweise über einen Computer für den Benutzer bereitgestellt wird. Hierzu kann ein Computerprogramm zumindest teilweise durch den Computer und/oder einen weiteren Computer ausgeführt werden, um die erfindungsgemäßen Verfahrensschritte durchzuführen. Der Computer kann ein mobiler Computer wie ein Laptop oder ein Tablet sein.

Ferner ist es möglich, dass mehrere Benutzer simultan oder zumindest teilweise gleichzeitig das erfindungsgemäße Verfahren anwenden. Entsprechend können die Schritte eines erfindungsgemäßen Verfahrens auch mehrfach und/oder zumindest teilweise zeitlich parallel durchgeführt werden. Bspw. werden für mindestens zwei oder mindestens drei oder mindestens vier Benutzer jeweils die Schritte zumindest teilweise gleichzeitig ausgeführt. Dabei kann bei der Auswahl der Installationsorte ggf. berücksichtigt werden, an welchen Orten sich die verschiedenen Benutzer gerade befinden (z. B. wird ein Installationsort in der Nähe zu einem Benutzer bevorzugt ausgewählt). Auch ist es möglich, dass für alle Benutzer das Verfahren die gleiche Installationsvorgabe verwendet. Hierzu kann die Installationsvorgabe z. B. zentral hinterlegt sein, sodass alle Benutzer z. B. über ein Datennetzwerk darauf zugreifen können und ein Installationsfortschritt für alle Benutzer transparent und zentral nachgehalten werden kann.

Für die Installation der Maschine können mehrere Komponenten vorgesehen sein. Bspw. erfolgt über die installierten Komponenten eine Verschaltung von Aktoren und/oder Sensoren mit einer Steuerungsvorrichtung, damit die Steuerungsvorrichtung wie eine SPS die Aktoren und/oder Sensoren ansteuern und/oder auslesen kann. Diesen Komponenten kann jeweils ein Identifikator zugeordnet sein, durch welchen die Komponenten eindeutig identifiziert werden können. Der Identifikator kann entsprechend eine Information sein, welche bspw. digital verarbeitet werden kann. Dabei kann der Identifikator z. B. eine Serien- und/oder Artikelnummer umfassen. Es ist daher auch möglich, dass technische Eigenschaften der Komponente anhand des Identifikators ermittelt werden können (z. B. kann anhand der Seriennummer eine Artikelnummer oder dergleichen ermittelt werden, zu welcher technische Eigenschaften verfügbar sind). Auch ist es möglich, dass in der Installationsvorgabe z. B. durch Artikelnummern oder dergleichen angegeben ist, an welchem Installationsort welche technischen Anforderungen an eine Komponente vorliegen. Dies ermöglicht eine Zuordnung der Komponente zu einem oder mehreren Installationsorten.

Als ein Installationsort wird im Rahmen der Erfindung z. B. eine (elektrische) Anschlussstelle und/oder ein Bauteil und/oder ein Verbindungselement und/oder ein Maschinenteil der Maschine bezeichnet, mit welcher bzw. welchem die Komponente elektrisch und/oder mechanisch verbunden werden kann.

Die jeweilige Komponente kann den Identifikator dadurch aufweisen, dass ein physisches oder ein elektronisches Identifikationsmittel am Installationselement vorgesehen und/oder angebracht ist. Die Komponenten können bspw. Installationselemente, Verbindungsmodule, Geräte, Kabel oder Bauteile sein, welche ein funktionaler Teil der Maschine sind. Der Identifikator umfasst vorteilhafterweise eine eindeutige und insbesondere eineindeutige Kennung. Damit ist es möglich, die Komponente anhand des Identifikators eindeutig im Zusammenhang mit der Maschine und/oder auch weiteren Maschinen und/oder der Installation der Maschine zu identifizieren. Es ist ferner möglich, dass durch das erfindungsgemäße Verfahren ein Ausdrucken des physischen Identifikationsmittels initiiert werden kann und/oder das digitale Identifikationsmittel automatisch an die Komponente übertragen wird.

Dem Identifikator können eine oder mehrere Informationen über die Komponente zugewiesen werden. Die wenigstens eine Information kann wenigstens eine der nachfolgenden Informationen umfassen: wenigstens eine Zustandsinformation, die ausgegebene Installationsinformation, eine Kennung der identifizierten Komponente, wenigstens eine der nachfolgend noch näher beschriebenen Dokumentationsspezifikationen wie Komponententyp, Maschinentyp, Anlagentyp, Benutzer, Benennung, Name, Stationsname, Zeitstempel wie Datum und Uhrzeit, Installationsdauer, Adresse in einem Bussystem, Application specific tag, Betriebsmittelkennzeichnung, Portbelegung, Portkonfiguration, Temperatur, Luftfeuchtigkeit, Beschleunigung, Emissionen, aktueller Projektstand bei der Montage, Planabweichung und Grund, Seriennummer der Komponente, Artikelnummer der Komponente, MAC-Adresse der Komponente und vorzugsweise einer Netzwerkschnittstelle der Komponente. Eine digitale Hinterlegung der wenigstens einen Information zugeordnet zu dem Identifikator ermöglicht es somit, einen digitalen Zwilling der Komponente zu schaffen. Auf diese Weise kann eine passive Smartifizierung der Komponente ermöglicht werden. Ein Application Specific Tag ist als ein Identifikator insbesondere in einem IO-Link Kommunikationssystem zu verstehen. IO-Link ist als ein Kommunikationssystem zur Anbindung von intelligenten Sensoren und Aktoren an ein Automatisierungssystem in der Norm IEC 61131-9 definiert.

Unter einer Smartifizierung versteht man insbesondere eine Erweiterung eines Industrieprodukts wie beispielsweise eine Komponente und/oder ein Bauteil und/oder ein Installationselement, wie z.B. ein Kabel, um intelligente bzw. automatisiert nutzbare Eigenschaften. Mit Hilfe von Informationstechnologien kann es ermöglicht werden, dass Komponenten Daten verarbeiten und zusätzliche Mehrwerte bieten können. Eine passive Smartifizierung kann als eine entsprechende Vorstufe mittels einem passiven intelligenten Bauelement wie beispielsweise einem NFC-Chip (dt. Nahfeldkommunikation, abgekürzt NFC) und/oder einem maschinenlesbaren Code vorgesehen sein. So kann eine Grundlage für eine automatisierte Erfassung oder für Änderungen und deren Auswirkungen auf die Funktion einer Maschine geschaffen werden. Die eindeutige, vorzugsweise eineindeutige Kennzeichnung in Verbindung mit dem Zugriff auf eine externe Datenbank kann das aktive Anreichern von Informationen und somit eine passive Smartifizierung ermöglichen.

Insbesondere werden über die Komponenten Geräte der Maschine wie Aktoren und/oder Sensoren betrieben, also vorzugsweise angesteuert und/oder ausgelesen. Für den Betrieb der Geräte kann eine Steuerungsvorrichtung wie eine SPS (Speicherprogrammierbare Steuerung) vorgesehen sein, welche über die Komponenten und Installationselemente den elektrischen Betrieb der Geräte durchführen kann. Hierzu kann die Steuerungsvorrichtung mit den Komponenten in elektrischer Verbindung stehen.

Vorzugsweise kann die Komponente ein Verbindungsmodul, beispielsweise ein Feldbusmodul, umfassen. Das Feldbusmodul kann über ein digitales Bussystem, insbesondere einem Feldbus, in einer Maschine andere Komponenten wie Installationselemente, Bauteile und/oder Geräte miteinander verbinden. Dabei können mehrere Verbindungsmodule über das Bussystem kommunikativ miteinander verbunden sein. Ein Feldbus umfasst insbesondere ein einziges Buskabel und verbindet alle Ebenen, von der Feld- bis zur Leitebene. Unabhängig von der Art der Automatisierung vernetzt der Feldbus die Komponenten in einer Anlage. Ein Feldbus ist vorzugsweise auch ein digitales Kommunikationsnetzwerk, das die unterschiedlichen Signale einzelner Komponenten über Feldbusknoten, sogenannten Hubs, übertragen kann. Die Kommunikation über den Feldbus kann dabei mittels unterschiedlichen Kommunikationsprotokollen erfolgen.

Es kann ferner möglich sein, dass die wenigstens eine Installationsinformation eine Installationsanweisung zur Unterstützung eines Benutzers wie einen Werker und/oder Installateur bei der Installation umfasst. Die Installationsanweisung kann dabei auch eine Anleitung für die Installation umfassen, bspw. eine Schritt-für-Schritt-Anleitung.

Das Initiieren der Ausgabe kann zumindest einen der nachfolgenden Schritte umfassen:
- Initiieren einer Anzeige des wenigstens einen ausgewählten Installationsorts für die Komponente auf einer Benutzeroberfläche eines Computers, wobei vorzugsweise die Benutzeroberfläche einen digitalen Zwilling zumindest eines Teils der Maschine visualisiert, und bevorzugt eine Topologie und/oder einen mechanischen und/oder einen elektrischen Anschlussplan des Teils der Maschine visualisiert, sodass der Installationsort insbesondere dadurch angezeigt werden kann, dass der Installationsort an dem digitalen Zwilling und/oder der Topologie und/oder dem Anschlussplan gekennzeichnet wird,
- Initiieren einer Anzeige des wenigstens einen ausgewählten Installationsorts der Komponente mittels Erweiterter Realität, und damit vorzugsweise durch eine Kennzeichnung direkt am physischen, realen Installationsort,
- Initiieren einer Ausgabe der Installationsanweisung als eine Anweisung für den Benutzer, einen gewünschten Installationsort aus einer Liste der mehreren ausgewählten Installationsorte für die Installation zu verwenden und/oder die Komponente an dem, vorzugsweise gewünschten, Installationsort zu montieren,
- Initiieren einer akustischen Ausgabe, insbesondere einer Sprachausgabe, der Installationsanweisung, vorzugsweise einer Benennung des Installationsortes,
- Initiieren einer grafischen Anzeige der Installationsanweisung, vorzugsweise in einer grafischen Benutzeroberfläche, vorzugsweise im Zusammenhang mit einer Visualisierung der Maschine,
- Initiieren einer grafischen Anzeige einer Liste der mehreren ausgewählten Installationsorten basierend auf dem Installationsvorschlag.

Dies ermöglicht eine unmittelbare Information des Benutzers durch die Installationsanweisung, in welcher Weise die Komponente installiert werden soll. Bspw. kann durch ein Anzeigen des wenigstens einen Installationsorts für die Komponente in der Installationsvorgabe angezeigt werden, an welcher Stelle der Maschine die Komponente angeschlossen werden soll und/oder mit welchem Teil der Maschine die Komponente elektrisch verbunden werden kann. Der Teil der Maschine kann bspw. eine andere Komponente und/oder ein Verbindungselement und/oder ein Bauteil sein.

Der wenigstens eine ausgewählte Installationsort, welcher insbesondere gemäß der Installationsvorgabe für den Anschluss der Komponente mit dem empfangenen Identifikator vorgeschlagen ist, kann bspw. über den empfangenen Identifikator aus der Installationsvorgabe abgefragt werden. Hierzu kann die Installationsvorgabe eine elektronische Abfrage ermöglichen, z. B. mittels einer Datenbank und/oder eine Liste und/oder dergleichen. Es ist ferner möglich, dass in der Installationsvorgabe mehrere Installationsorte vorgesehen sind, für welche die Komponente zur Installation geeignet ist. Bspw. kann der Identifikator eine technische Eigenschaft der Komponente, z. B. basierend auf einer Artikel- und/oder Seriennummer, und die Installationsvorgabe eine technische Anforderung, z. B. basierend auf einer Artikelnummer, der verschiedenen Installationsorte spezifizieren. Es ist möglich, dass ein Installationsort ausgewählt und durch den Installationsvorschlag zur Installation der Komponente vorgeschlagen wird, wenn dort die Eignung der Komponente mittels der Auswertung festgestellt wird.

Die Anzeige des wenigstens einen ausgewählten Installationsorts als Installationsvorschlag auf der Benutzeroberfläche kann bspw. eine grafische Darstellung des einen oder der mehreren Installationsorte für die Komponente umfassen, wobei der wenigstens eine ausgewählte Installationsort, welche für den Anschluss der Komponente mit dem empfangenen Identifikator vorgeschlagen ist, grafisch hervorgehoben werden kann.

Die Benutzeroberfläche kann eine grafische Benutzeroberfläche sein, welche auf einem Bildschirm vorzugsweise eines Computers dargestellt wird. Der Computer kann bspw. ein tragbarer Computer wie ein Laptop oder Tablet sein.

Die Anzeige mittels Erweiterter Realität (engl. Augmented Reality) kann bspw. dadurch erfolgen, dass eine VR (Virtual Reality) Brille durch einen Benutzer verwendet wird, um zusätzliche Informationen anzuzeigen, und/oder dass die Umgebung des Benutzers durch eine Kamera aufzeichnet und das Kamerabild verarbeitet wird, um zusätzliche Informationen in das Kamerabild einzubringen. Die zusätzlichen Informationen umfassen z. B. die Hervorhebung des Installationsorts, wenn in dem Kamerabild der physische Installationsort der Komponente zu sehen ist. Auch ist es möglich, dass der Benutzer ein Eingabemittel dazu verwenden kann, um den hervorgehobenen Installationsort zu kennzeichnen. Der gekennzeichnete Installationsort kann dann ggf. über eine Installationsnachricht erfasst werden, um automatisch in der Installationsvorgabe zu hinterlegen, dass an diesem Installationsort die Komponente installiert wurde.

Ferner kann auch eine akustische Ausgabe vorgesehen sein, welche z. B. eine Ansteuerung eines Lautsprechers umfasst. Die akustische Ausgabe kann bspw. eine Sprachausgabe sein, durch welche die Bezeichnung des Installationsorts gesprochen wird.

Es ist denkbar, dass die wenigstens eine Installationsinformation für die computer-gestützte Installation zumindest dadurch verwendet wird, dass die Installationsinformation eine Angabe des wenigstens einen Installationsortes umfasst, an welchem die Komponente mit einer weiteren Komponente und/oder einem Installationselement wie einem Kabel verbunden werden kann. Damit unterstützt die Installationsinformation die Installation, da es nicht mehr auf ein manuelles Auswerten und Heraussuchen von sinnvollen Installationsorten in einem Schaltplan bei der Installation durch einen erfahrenen Benutzer ankommt. Vielmehr kann diese Aufgabe automatisiert übernommen werden, da automatisch sinnvolle Installationsorte ausgewählt und durch die Installationsinformation angegeben werden können.

Es kann ferner nicht nur vorgesehen sein, dass der wenigstens eine ausgewählte Installationsort angegeben wird, an welchem eine Verbindung der Komponente z. B. mit einer weiteren Komponente und/oder einem Installationselement wie einem Kabel möglich ist. Auch kann es von Vorteil sein, wenn im Rahmen der Erfindung das Verfahren den folgenden weiteren Schritt umfasst: Ermitteln eines Verbindungszustands der Komponente, um festzustellen, ob die Verbindung hergestellt wurde. Dies bietet somit eine Art Rückkopplung, um die computer-gestützte Installation auch dadurch bereitzustellen, dass automatisch ein Installationsfortschritt erkannt wird. Hierzu kann bspw. eine elektrische Verbindungsprüfung erfolgen, durch welche automatisiert festgestellt werden kann, ob die elektrische Komponente mit und über ein Bussystem, beispielsweise ein Feldbussystem, eine elektrisch leitende Verbindung aufweist. Es können auch zusätzliche oder alternative Möglichkeiten zur Ermittlung des Verbindungszustands vorgesehen sein. So kann das Ermitteln des Verbindungszustands ferner umfassen: Empfangen einer Installationsnachricht auf Basis einer Eingabe des Benutzers und/oder von der Komponente. Die empfangene Installationsnachricht kann hierbei indizieren, dass die Verbindung der Komponente hergestellt wurde. Entsprechend kann überprüft werden, dass derjenige oder ausgewählte Installationsort, welcher in der Installationsinformation angegeben wurde, auch tatsächlich an dem Installationsort mit dem Bussystem verbunden worden ist. Es ist möglich, dass durch das Feststellen der Herstellung der Verbindung, z. B. durch ein manuelles Quittieren eines Benutzers und/oder ein automatisches Quittieren eine Dokumentation ausgelöst wird. Bei der Dokumentation wird bspw. eine Installationsdokumentation hinterlegt, wie nachfolgend noch mit weiteren Einzelheiten beschrieben wird. Diese Dokumentation kann ggf. wiederholt ausgeführt werden, z. B. bei jedem Quittieren einer Tätigkeit, um damit sukzessive die Dokumentation der Installation aufzubauen. Um einerseits die Installationsanweisungen für den Benutzer in der Maschine sichtbar zu machen und andererseits die Dokumentation der verrichteten Arbeiten im System dokumentieren zu können, ist es vorteilhaft, dass das System und vorzugsweise die erfindungsgemäße Vorrichtung mit den Komponenten kommunizieren kann. Im Nachgang der Installation und/oder Dokumentation kann optional auf Basis der Dokumentation die Steuerungsvorrichtung programmiert werden, und/oder die Komponente(n) konfiguriert werden. Aus diesem Umstand heraus kann es möglich sein, dass die Komponente zuvor nicht weiß, welche Aufgabe sie in der zukünftigen Maschine zu erledigen hat. Dies kann auch als "unkonfiguriert" bezeichnet werden.

Ein weiterer Vorteil im Rahmen der Erfindung ist erzielbar, wenn das Verfahren die folgenden weiteren Schritte umfasst:
- Verifizieren des ausgewählten Installationsorts der Komponente auf Basis des empfangenen Identifikators und der Installationsvorgabe, insbesondere, um festzustellen, ob ein Benutzer die Installationsinformation in der Form einer Installationsanweisung für den ausgewählten Installationsort korrekt umgesetzt hat,

wobei bevorzugt in Abhängigkeit von dem Verifizieren eine Kennzeichnung für die Installationsvorgabe hinterlegt wird, und besonders bevorzugt im Falle einer positiven Verifikation der nachfolgende Schritt durchgeführt wird:
   - Hinterlegen der Kennzeichnung des Installationsorts als korrekt ausgewählter Installationsort in der Installationsvorgabe,
wobei vorteilhafterweise im Falle einer negativen Verifikation zumindest einer der nachfolgenden Schritte durchgeführt wird:
   - Hinterlegen einer Kennzeichnung des Installationsorts als geänderter ausgewählter Installationsort in der Installationsvorgabe, bevorzugt basierend auf einem vom Benutzer erfassten Installationsparameter, insbesondere einem Anlass oder Grund der Änderung, wobei vorzugsweise eine Angabe zum Anlass oder Grund der Änderung mit hinterlegt wird.
   - Initiieren einer Korrektur des ausgewählten Installationsorts gemäß der Installationsvorgabe.

Vorteilhafterweise kann auf Basis der Ermittlung des Verbindungszustands die Verifizierung durchgeführt werden. Das Verifizieren ermöglicht damit die Beurteilung, ob der Benutzer den Installationsort mit den Angaben des Identifikators richtig ausgewählt hat. Das Ergebnis der Verifikation kann genutzt werden, um die Kennzeichnung in der Installationsvorgabe zu hinterlegen. Somit kann die Installationsvorgabe zu einem späteren Zeitpunkt genutzt werden, um zu überprüfen, welche Eigenschaften der die Komponente am ausgewählten Installationsort umfasst, um beispielsweise ein geeignetes Installationselement an der überprüften Komponente anschließen zu können und/oder um zu überprüfen, in welchem Umfang von den technischen Eigenschaften am ausgewählten Installationsort in der Installationsvorgabe bei der Installation abgewichen worden ist.

Sollte ein Benutzer von der Installationsanweisung abweichen, geschieht dies häufig aus einem relevanten Grund oder Anlass. Daher kann einem Benutzer die Möglichkeit bereitgestellt werden, bspw. über die Benutzeroberfläche und/oder eine Eingabevorrichtung wie eine Spracheingabe und/oder eine Tastatur und/oder eine Maus und/oder ein Touchscreen, einen Installationsparameter einzugeben. Vorteilhafterweise kann im Falle einer negativen Verifikation, wenn der Benutzer die Installationsanweisung also nicht korrekt umgesetzt hat, zumindest einer der nachfolgenden Schritte durchgeführt werden: Hinterlegen einer Kennzeichnung der Anschlussstelle als geänderte verbundene Anschlussstelle in der Installationsvorgabe, bevorzugt basierend auf einem vom Benutzer erfassten Installationsparameter, insbesondere einem Anlass oder Grund der Änderung, wobei vorzugsweise eine Angabe zum Anlass oder Grund der Änderung mit hinterlegt wird, und bevorzugt: Initiieren einer Korrektur der Verbindung gemäß der Installationsvorgabe. Die Korrektur kann bspw. dann eine Anpassung der Installationsvorgabe umfassen, wenn die neue Verbindung begründet ist und somit zur gewünschten Installation vorteilhaft beiträgt.

Des Weiteren kann vorgesehen sein, dass die wenigstens eine Installationsinformation eine Installationsanweisung zur Unterstützung eines Benutzers bei einem Wiederaufbau der Maschine umfasst, wobei vorzugsweise das Initiieren der Ausgabe zumindest den nachfolgenden Schritt umfasst: Initiieren einer Ausgabe einer Installationsreihenfolge mittels der wenigstens einen Installationsinformation für die Installation der Maschine. Die Installationsinformation kann z. B. eine Installationsanleitung umfassen, welche auch eine Reihenfolge der Installation angibt. Dies vereinfacht die Installation bei einem Wiederaufbau für einen Benutzer und beschleunigt die Installation, da eine aufwendige Interpretation eines Schalt- und insbesondere Anschlussplans zumindest teilweise nicht mehr erforderlich ist.

Gemäß einer vorteilhaften Weiterbildung der Erfindung kann vorgesehen sein, dass das Initiieren der Ausgabe eine Initiierung einer bidirektionalen Kommunikation mit der identifizierten Komponente über ein Bussystem umfasst. Dies ermöglicht es, dass eine Kommunikation beispielsweise im Rahmen der Konfiguration der Komponente oder mehrerer Komponenten deutlich vereinfacht und beschleunigt werden kann. Die Ausgabe kann z. B. dadurch getriggert werden, dass eine bestimmte Nachricht, vorzugsweise ein Befehl oder eine Konfigurationsnachricht, mittels der Kommunikation über das Bussystem an die Komponente übertragen wird. Hierzu kann bspw. ein Computerprogramm durch eine Datenverarbeitungsvorrichtung ausgeführt werden, wobei die Datenverarbeitungsvorrichtung mit dem Bussystem verbunden ist.

Es ist möglich, dass automatisiert angegeben wird, an welchem Installationsort oder welchen Installationsorten eine bestimmte Komponente installiert werden kann. Es kann bspw. möglich sein, dass in der Installationsvorgabe für die einzelnen Installationsorte jeweils technische Anforderungen definiert sind. Dies ist bspw. durch die Angabe einer Artikelnummer einer Komponente für den jeweiligen Installationsort möglich. Allerdings ist es ggf. für die ordnungsgemäße Installation nicht unbedingt erforderlich, bereits die konkrete Komponente z. B. durch eine Seriennummer in der Installationsvorgabe vorzugeben, da auch andere Komponenten unterschiedlicher Seriennummern die gleichen technischen Eigenschaften entsprechend der Artikelnummer aufweisen können. Auch ist es denkbar, dass für die ordnungsgemäße Installation eine Komponente an einem der Installationsorte installiert werden kann, für welchen eine andere Artikelnummer als die der Komponente angegeben ist. Dies hängt damit zusammen, dass die Komponente die technischen Anforderungen, welche eine Komponente mit der Artikelnummer hat, ebenfalls erfüllen kann. Bspw. kann eine Komponente in der Form eines Verbindungselements mit der technischen Eigenschaft "8 m Länge" auch an einem Installationsort installiert werden, welcher als technische Anforderung "5 m Länge" vorgibt, da das Verbindungselement entsprechend gekürzt werden kann. Allerdings ist es nicht für die ordnungsgemäße Installation möglich, dass eine Komponente in der Form eines Verbindungsmoduls mit der technischen Eigenschaft "Slave" auch an einem Installationsort installiert wird, welcher als technische Anforderung "Master" vorgibt.

Durch die Kennzeichnung eines Installationselements mit einem maschinenlesbaren Code, der die Artikelnummer und/oder Seriennummer und/ weitere technische Eigenschaften enthält, kann das Kabel bzw. Installationselement passiv smartifiziert werden. So ist das System in der Lage, die technische Brauchbarkeit des Installationselements direkt zu prüfen, validieren und zu dokumentieren. Zum Beispiel kann so festgestellt werden, ob das Installationselement schleppketten geeignet ist, oder ob es an einer statisch belasteten Stelle eingebaut wird und somit als schleppkettentauglich für den Installationsort überqualifiziert ist. Des Weiteren ist durch die Kennzeichnung mittels einer Seriennummer das Installationselement nach der Dokumentation eineindeutig dem entsprechenden Installationsort zugewiesen und kann auch bei einer späteren Demontage oder Austausch der entsprechenden Stelle zugeordnet werden.

Die Anforderung für die technische Eigenschaft kann z. B basierend auf der Installationsvorgabe extrahiert werden, indem anhand der in der Installationsvorgabe für einen Installationsort angegebenen Artikelnummer die technischen Anforderung aus einem (ggf. digitalisierten) Datenblatt zu dieser Artikelnummer ermittelt werden. Damit ist es möglich, dass auch für Komponenten, welche in der Installationsvorgabe nicht explizit vorgesehen sind, ein geeigneter Installationsort gefunden werden kann. Dies ermöglicht es, dass der technische Aufwand für die Beschaffung der Komponenten reduziert wird und auch bereits vorhandene Komponenten verwertet werden können.

Es ist möglich, dass bei der Auswertung festgestellt wird, dass die wenigstens eine technische Eigenschaft der Komponente die wenigstens eine Anforderung nicht erfüllt, damit handelt es sich um eine unterqualifizierte Komponente. Es kann aber auch möglich sein, dass die wenigstens eine technische Eigenschaft der Komponente die wenigstens eine Anforderung sogar übertrifft (s. das voranstehende Beispiel des Verbindungselements mit 8 m Länge). Damit kann es sich um eine überqualifizierte Komponente handeln. Diese Überqualifikation kann bei der Auswertung entsprechend quantifiziert werden. Bei der Auswahl eines oder mehrerer Installationsorte kann es vorgesehen sein, dass ein solcher Installationsort für die Installation der Komponente ausgewählt und/oder bevorzugt wird, bei welchem ein möglichst geringer Grad von Überqualifikation vorliegt. Auch ist es möglich, dass basierend auf der Quantifizierung der Überqualifikation eine Rangliste der ausgewählten Installationsorte bestimmt und/oder durch die Installationsinformation angegeben wird.

Auch ist es möglich, dass der nachfolgende Schritt vorgesehen ist:
- Auswählen des oder derjenigen Installationsorte, für welche die Erfüllung der Anforderung nur teilweise festgestellt wird, wobei eine Installationsweisung mit einer Angabe von Handlungen und/oder Hinweisen generiert werden kann, um die Installation der Komponente dennoch am Installationsort vorzunehmen.

Bspw. kann im Falle einer Unterqualifikation der Komponente noch eine Möglichkeit bestehen, die Installation der Komponente dennoch durchzuführen. Bspw. können durch die Handlungen solche Maßnahmen getroffen werden, welche die Unterqualifikation der Komponente kompensieren. Bspw. kann bei der Anforderung einer Schutzklasse die Handlung dafür sorgen, dass der Schutz der Komponente durch andere Maßnahmen hergestellt wird.

Die Anforderung kann z. B. eine Anforderung in der Form einer Schutzklasse und/oder einer Vorgabe einer physikalischen Eigenschaft und/oder einer Vorgabe einer technischen, insbesondere elektrischen und/oder mechanischen Spezifikation umfassen. Vorzugsweise kann die Anforderung dabei als Mindestanforderung an die technische Eigenschaft ausgeführt sein (z. B. wird eine Mindestlänge des Verbindungselements vorgegeben).

Ferner kann in Abhängigkeit von dem Abgleich eine Rangliste der ausgewählten Installationsorte bestimmt wird. Die Auswertung kann z. B. eine Quantifizierung eines Grads der Erfüllung durchführen, sodass das Feststellen der Erfüllung der Anforderung nicht binär angegeben sein muss. Entsprechend dieser Quantifizierung können die Installationsorte sodann priorisiert werden. Es ist denkbar, dass einem Benutzer die gesamte Rangliste als Liste der ausgewählten Installationsorte angezeigt wird. Auch ist es denkbar, dass einem Benutzer nur ein Teil der Rangliste angezeigt wird, z. B. nur der Installationsort als ausgewählter Installationsort angezeigt wird, bei welchem die Komponente die geringste Überqualifizierung aufweist.

Darüber hinaus ist es möglich, dass das Ermitteln der wenigstens einen technischen Eigenschaft der Komponente umfasst: Auslesen der technischen Eigenschaft aus einer Datenbank. Bspw. ist hierzu dem Identifikator in der Datenbank die wenigstens eine technische Eigenschaft zugewiesen.

Außerdem kann das Ermitteln der wenigstens einen technischen Anforderung umfassen:
- Ermitteln einer Kennzeichnung in der Installationsvorgabe, vorzugsweise einer Artikelnummer in einem Schaltplan, wobei vorzugsweise die Kennzeichnung mit vorgegebenen technischen Eigenschaften korreliert,
- Auslesen der vorgegebenen technischen Eigenschaften anhand der Kennzeichnung aus einer Datenbank, um die technischen Anforderungen zu ermitteln.

Die Kennzeichnung kann z. B. eine Artikelnummer sein. Falls nun festgestellt wird, dass der Identifikator bereits dieser Artikelnummer entspricht, kann ggf. der Abgleich übersprungen werden, da feststeht, dass die Anforderung erfüllt wird. Auf die Datenbank kann z. B. über ein Netzwerk und/oder über das Internet zugegriffen werden. Die Datenbank kann lokal vorgesehen sein oder über eine Cloud bereitgestellt werden.

Es ist möglich, dass das erfindungsgemäße Verfahren zumindest einen der nachfolgenden, weiteren Schritte umfasst:
- Generieren eines weiteren Identifikators für die Komponente, um zu kennzeichnen, dass die konkrete Komponente an dem Installationsort installiert wurde
- Erweitern der Installationsvorgabe um den Identifikator und/oder um eine weitere Spezifikation der Komponente, vorzugsweise eine Netzwerkadresse wie IP und/oder MAC-Adresse und/oder Application specific tag, bevorzugt zugewiesen zu dem ausgewählten Installationsort, welcher für die Installation der Komponente durch einen Benutzer verwendet wird.

Wie bereits voranstehend beschrieben wurde, kann die Installationsvorgabe vor der Installation der Komponente lediglich eine generische Information darüber umfassen, welche Komponente welchem Installationsort zugewiesen ist. Die Komponente kann ggf. auch für mehrere Installationsorte geeignet sein, sodass erst durch eine Installationshandlung eines Benutzers feststeht, an welchem Installationsort die konkrete Komponente tatsächlich installiert wurde. Um dies in der Installationsvorgabe zu kennzeichnen, kann der weitere Identifikator und/oder eine weitere Spezifikation abgefragt werden. So kann z. B. eine Seriennummer der installierten Komponente in der Installationsvorgabe für den Installationsort hinterlegt werden. Auch ist es möglich, und ggf. für die Steuerung durch die Steuerungsvorrichtung erforderlich, dass die MAC-Adresse oder eine andere Netzwerkadresse der installierten Komponente, wie z.B. der Application specific tag, in der Installationsvorgabe hinterlegt wird. Auch ist es denkbar, dass als Komponente ein Sensor vorgesehen ist, welcher einen Device-Namen und/ oder einen Application specific tag erhält. Auch dies kann als weiterer Identifikator ggf. in der Installationsvorgabe hinterlegt werden. Das beschriebene Hinterlegen kann zu der Erweiterung der Installationsvorgabe führen, um dadurch einen Installationsfortschritt und/oder-zustand in der Installationsvorgabe festzuhalten. So kann auch im späteren Betrieb der Maschine, bspw. wenn ein Fehler wie ein Kabelbruch auftritt, anhand der erweiterten Installationsvorgabe eine Fehlererkennung und/oder -diagnose z. B. durch die Steuerungsvorrichtung erfolgen. Ferner kann bei einem Wiederaufbau der Maschine und bei einer Verwendung von sogenannten Application Specific Tags als Identifikator vorteilhafterweise ein einfacheres und schnelleres Installieren von Installationselementen erfolgen, da aufgrund dieser Identifikatoren die Auswahl einer korrekten Anschlussstelle als Anforderung entfallen kann.

Vorteilhafterweise kann bei der Erfindung vorgesehen sein, dass wenigstens eine der nachfolgenden Spezifikationen empfangen wird, vorzugsweise durch die Installationsnachricht, um basierend auf dem empfangenen Identifikator und der identifizierten Komponente einen digitalen Zwilling des Installationselements und/oder der elektrischen Komponente zu erstellen: Komponententyp, Maschinentyp, Anlagentyp, Benutzer, Benennung, Name, I/O-Link Name, Stationsname, Zeitstempel Datum und Uhrzeit, Installationsdauer, Adresse in einem Bussystem , Betriebsmittelkennzeichnung, Portbelegung, Portkonfiguration, Temperatur, Luftfeuchtigkeit, Beschleunigung, Emissionen, aktueller Projektstand bei der Montage, Planabweichung und/oder Grund. Die wenigstens eine Spezifikation kann im Rahmen dieser Erfindung auch als Dokumentationsspezifikation bezeichnet werden.

Die Installationsnachricht kann z. B. auf Basis einer Eingabe eines Benutzers erzeugt worden sein, wobei der Benutzer in der Eingabe die wenigstens eine Spezifikation angegeben haben kann. Auch ist es möglich, dass die Spezifikation automatisiert ermittelt wird, z. B. durch die Komponente und/oder eine Datenverarbeitungsvorrichtung, insbesondere anhand des empfangenen Identifikators. Hierzu kann bspw. die wenigstens eine Spezifikation in der Komponente und/oder in dem Installationselement hinterlegt sein.

In einer weiteren Möglichkeit kann vorgesehen sein, dass die Installationsinformation eine Installationskonfiguration und/oder eine Installationsdokumentation umfasst, vorzugsweise für eine Demontage und/oder einen Wiederaufbau der Maschine, welche zur Dokumentation hinterlegt, vorzugsweise in einem Datenspeicher hinterlegt und/oder an die elektrische Komponente übertragen wird. Der Datenspeicher kann dabei als nicht-flüchtiger Datenspeicher ausgeführt sein, um eine spätere Auswertung der Installationskonfiguration und/oder der Installationsdokumentation zuverlässig zu ermöglichen. Dabei kann die Installationskonfiguration und/oder die Installationsdokumentation bspw. die hinterlegte Kennzeichnung basierend auf der Verifikation umfassen.

Ein weiterer Vorteil kann im Rahmen der Erfindung erzielt werden, wenn die Installationsinformation eine eindeutige Kennung umfasst, welche das Installationselement und/oder die identifizierte Komponente kennzeichnet, wobei die Installationsinformation in der Installationsvorgabe, insbesondere in einem digitalisierten Bauplan, vorzugsweise umfassend ECAD- und/oder MCAD-Daten, hinterlegt wird, und/oder wobei anhand des Identifikators das Installationselement aus einer Mehrzahl gleichartiger Installationselemente ausgewählt wird und/oder die identifizierte Komponente aus einer Mehrzahl gleichartiger Komponenten ausgewählt wird. Die Installationsvorgabe ermöglicht es damit, anhand der Kennung und/oder des Identifikators die Zuordnung der Installationselemente mit den Komponenten abzufragen. Hierzu kann die Installationsvorgabe eine Verknüpfung der Kennungen untereinander und/oder mit den Identifikatoren umfassen. Der Identifikator kann optional eindeutig einer der Kennungen der Installationselemente zugeordnet sein und/oder der Identifikator kann dieser Kennung entsprechen.

Ein weiterer Vorteil im Rahmen der Erfindung ist erzielbar, wenn die Installationsvorgabe eine vordefinierte Spezifikation über einen modularen und/oder dezentralen Aufbau der Maschine, insbesondere der Anlage, vorzugsweise basierend auf vorgegebenen ECAD- und/oder MCAD-Daten, umfasst, insbesondere über eine Verschaltung der Komponenten in der Form von Verbindungsmodulen, vorzugsweise umfassend einen Elektro-Anschlussplan, wobei bevorzugt die Installationsvorgabe durch eine Verknüpfung der ECAD- und MCAD-Daten bestimmt wird. Damit kann die Installationsvorgabe einen digitalen Schaltplan und/oder Bauplan und/oder Installationsplan der Maschine umfassen.

Zudem ist im Rahmen der Erfindung denkbar, dass anhand des Identifikators eine Konfiguration der Komponente durchgeführt wird, um die Komponente von einem basiskonfigurierten Zustand, in welchem die Komponente vorzugsweise zur bidirektionalen Kommunikation mittels eines Bussystems konfiguriert ist und/oder eine funktionelle Ansteuerung durch eine Steuerungsvorrichtung, vorzugsweise eine SPS, ausgenommen ist, in einen Zustand mit erweiterter Konfiguration zur funktionellen Ansteuerung durch die Steuerungsvorrichtung überführt wird.

Der empfangene Identifikator ermöglicht es, zu erkennen, welche Komponente an welchem Installationsort angeschlossen werden soll. Diese Erkennung kann genutzt werden, um eine für die Installation notwendige Konfiguration der Komponenten automatisiert durchführen zu können, was den Konfigurationsaufwand an einer Komponente während der Installation oder auch später beim Betrieb der Anlage deutlich reduziert. Bspw. wird anhand des empfangenen Identifikators und anhand der Installationsvorgabe bestimmt, welche der Komponenten mit dem Bussystem verbunden ist (oder wird). Entsprechend kann die Komponente für diesen Installationsort konfiguriert werden, sodass für die spätere funktionale Ansteuerung durch die Steuerungsvorrichtung der Steuerungsvorrichtung bekannt ist, welche Komponente verbunden ist. Dies ermöglicht es der Steuerungsvorrichtung z. B., über diese Komponente ein Installationselement und/oder wenigstens ein Gerät der Maschine wie einen Aktor und/oder Sensor zu prüfen oder zu betreiben.

Ein weiterer Vorteil kann im Rahmen der Erfindung erzielt werden, wenn der Identifikator eine Kennung, insbesondere eine Artikelnummer des Verbindungsmoduls und/oder einen Typ der Komponente, insbesondere des Verbindungsmoduls und/oder mindestens eine technische Eigenschaft der Komponente umfasst.

Dies hat den Vorteil, dass eine signifikant schnellere Zuordnung einer Komponente gemäß dem Identifikator gewährleistet ist

In einer weiteren Möglichkeit kann vorgesehen sein, dass die Auswertung zum Auswählen des wenigstens einen Installationsorts den nachfolgenden weiteren Verfahrensschritt umfasst, dass ein Simulieren der technischen Eigenschaften der Komponente des wenigstens einen ausgewählten Installationsorts hinsichtlich eines Einflusses auf eine in der Installationsvorgabe spezifizierten Funktionalität, wodurch ein Ergebnis der Simulation hinsichtlich einer Eignung und/oder Funktionsfähigkeit der Komponente für den ausgewählten Installationsort bereitgestellt wird, wobei das Initiieren einer Ausgabe wenigstens einer Installationsinformation den nachfolgenden Schritt umfasst, dass ein Initiieren einer Ausgabe einer Handlungsempfehlung als ein Vorschlag für den Benutzer erfolgt, eine alternative Komponente an dem wenigstens einen ausgewählten Installationsort auf Basis des Ergebnisses des Simulierens zu montieren.

Dies ermöglicht es, dass eine flexiblere und fehlerfreie Installation der Komponente gewährleistet werden kann.

Zudem kann eine Vorrichtung zur Datenverarbeitung, umfassend Mittel zur Ausführung der Schritte eines erfindungsgemäßen Verfahrens, ebenfalls Gegenstand der Erfindung sein. Die Vorrichtung kann dazu angepasst sein, mit den Komponenten, insbesondere Modulen der Maschine, zu kommunizieren, vorzugsweise ohne dass die Module vorkonfiguriert sind und/oder an eine Steuerungsvorrichtung angeschlossen sind.

Darüber hinaus ist es möglich, dass die Komponenten und ein Computer und/oder eine Steuerungsvorrichtung über ein Bussystem jeweils zur bidirektionalen Kommunikation miteinander verbunden sind, wobei die bidirektionale Kommunikation auf Basis eines Kommunikationsprotokolls für ein Feldbussystem vorgesehen ist, insbesondere auf Basis eines ProfiNet-, Ethernet/IP-, EtherCAT oder 802.3-Standards, und/oder die bidirektionale Kommunikation kabelgebunden über ein Bussystem oder kabellos mittels Bluetooth oder WLAN, auf Basis eines Standards gemäß IEEE 802.11 oder auf Basis eines Mobilfunk-Telekommunikationsstandards vorgesehen ist.

Ebenfalls Gegenstand der Erfindung ist ein Computerprogramm, umfassend Befehle, die bei der Ausführung des Programms durch einen Computer, wie die erfindungsgemäße Vorrichtung zur Datenverarbeitung, diesen veranlassen, die Schritte eines erfindungsgemäßen Verfahrens auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Es kann vorgesehen sein, dass mehrere Benutzer die (gleichen) Verfahrensschritte simultan und/oder zumindest teilweise gleichzeitig durchführen. Die simultane und/oder zumindest teilweise gleichzeitige Ausführung von (gleichen) Verfahrensschritten durch mehrere Benutzer wird auch als Mehrbenutzeranwendung bezeichnet.

Im Zusammenhang mit einem erfindungsgemäßen Verfahren, insbesondere bei einer Mehrbenutzeranwendung und/oder bei dem weiteren Verfahren, kann eine Übergabe zwischen den unterschiedlichen Benutzern vorgesehen sein. Um eine Übergabe zwischen den, vorzugsweise beiden, Benutzern zu ermöglichen und einen optimalen Prozess zu gewährleisten, kann ein Bearbeitungsstand des jeweiligen Benutzers automatisch und in Echtzeit digital dokumentiert werden. So können die beiden oder auch mehrere Benutzer gleichzeitig an verschiedenen Bereichen der Maschine arbeiten, ohne die Integrität der elektrischen Installation zu gefährden oder langwierige Abstimmungsprozesse durchführen zu müssen.

### Kurzbeschreibung der Zeichnungen

Zum besseren Verständnis der Offenbarung wird auf die folgenden Zeichnungen verwiesen:
- Fig. 1:: Eine zentrale Verschaltung bei einer Maschine mittels eines Schaltschranks.
- Fig. 2:: Eine dezentrale Verschaltung gemäß Ausführungsbeispielen der Erfindung.
- Fig. 3: Eine schematische Darstellung von Teilen eines Systems gemäß Ausführungsbeispielen der Erfindung.
- Fig. 4: Eine schematische Darstellung von Einzelheiten eines Verfahrens gemäß Ausführungsbeispielen der Erfindung.
- Fig. 5: Eine schematische Darstellung von Schritten eines Verfahrens gemäß Ausführungsbeispielen der Erfindung.

### Beschreibung der Ausführungsbeispiele

Das Planen, Installieren und Einrichten von Maschinen sowie elektronischer Automatisierungstechnik ist eine komplexe Aufgabe. Dies gilt für zentralisierte Schaltschrank-Systeme ebenso, wie für dezentralisierte Systeme, in denen Steuerungsmodule direkt an den Anlagen angebracht werden. Die entsprechenden Prozesse werden von unterschiedlichen Personen, wie Anlagen-Planer, Elektro-Planer, Installateur, Anlagenprogrammierer etc. durchgeführt. Eine Besonderheit bei dezentralen Systemen ist die Verteilung der Module an verschiedenen Stellen einer Maschine im Vergleich zu den zentralisierten Schaltschrank-Systemen. Gerade bei größeren Maschinen kann eine simultane, das heißt zeitgleich parallel durch mehrere Benutzer ausgeführte Installation aus zeitlichen und logistischen Gründen vorteilhaft sein. Um einen reibungslosen Installationsprozess zu ermöglichen, soll der Arbeitsstand automatisch, benutzerindividuell und in Echtzeit digital dokumentiert werden. Über den ganzen Anlagen-Lebenszyklus ist es aus unterschiedlichen Gründen (wie z.B. Wartungsplanung, Systemdiagnosen) wichtig, über eine vollständige Dokumentation aller relevanten Informationen zu verfügen.

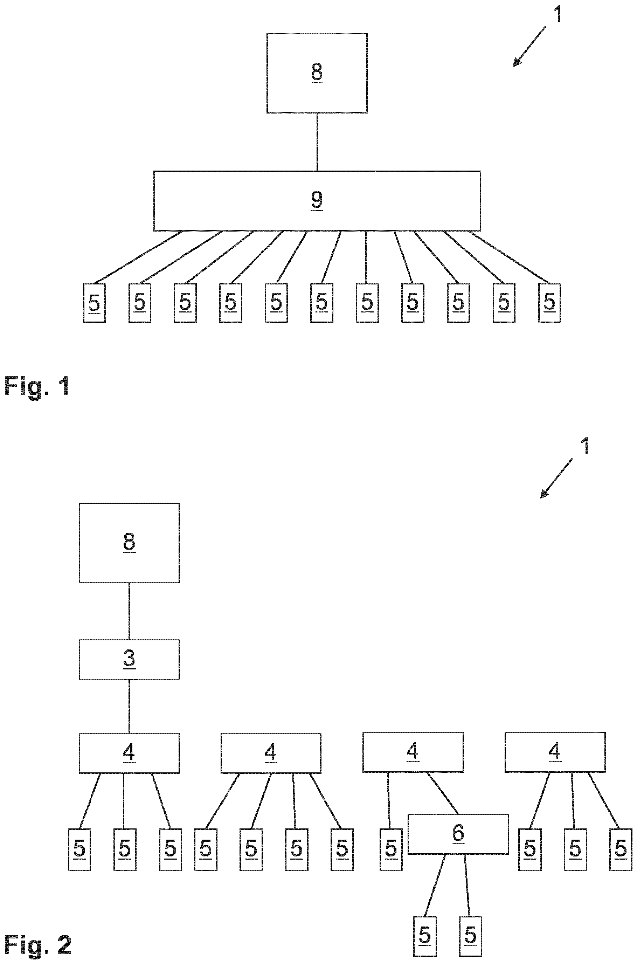

In Fig. 1 ist schematisch eine zentrale Verschaltung mittels eines Schaltschranks 9 dargestellt, um diese einer dezentralen Verschaltung mittels räumlich dezentral angeordneten Komponenten 4 einer Maschine 1 in Fig. 2 gegenüberzustellen. Anstelle einer Verbindung sämtlicher Geräte 5 wie Sensoren und Aktoren unmittelbar mit dem Schaltschrank 9 wie in Fig. 1 dargestellt, können bei der dezentralen Verschaltung in Fig. 2 mehrere Komponenten 4, also insbesondere Verbindungsmodule, eingesetzt werden. Diese ermöglichen, wie der Schaltschrank 9, eine Kopplung der Geräte 5 mit einer Steuerungsvorrichtung 8 wie einer SPS. Allerdings können die Verbindungsmodule 4 dezentral und verteilt in der Nähe zu den Geräten 5 vorgesehen sein. Die Verbindungsmodule 4 verschalten somit jeweils die Geräte 5 nur teilweise, wobei die Verbindungsmodule 4 zusammen oder beispielsweise ein und/oder mehrere Verbindungsmodule 4 über jeweils einen und/oder mehrere Hubs 6 die gesamte Verschaltung vornehmen. Um die Konfiguration und/oder Ansteuerung der Verbindungsmodule 4 zentral zu ermöglichen, kann ein Mastermodul 3 mehreren der einzelnen Verbindungsmodulen 4 vorgeschaltet sein. Ebenfalls ist es möglich, dass eine weitere Untergliederung der Verschaltung mittels wenigstens eines Hubs 6 erfolgt.

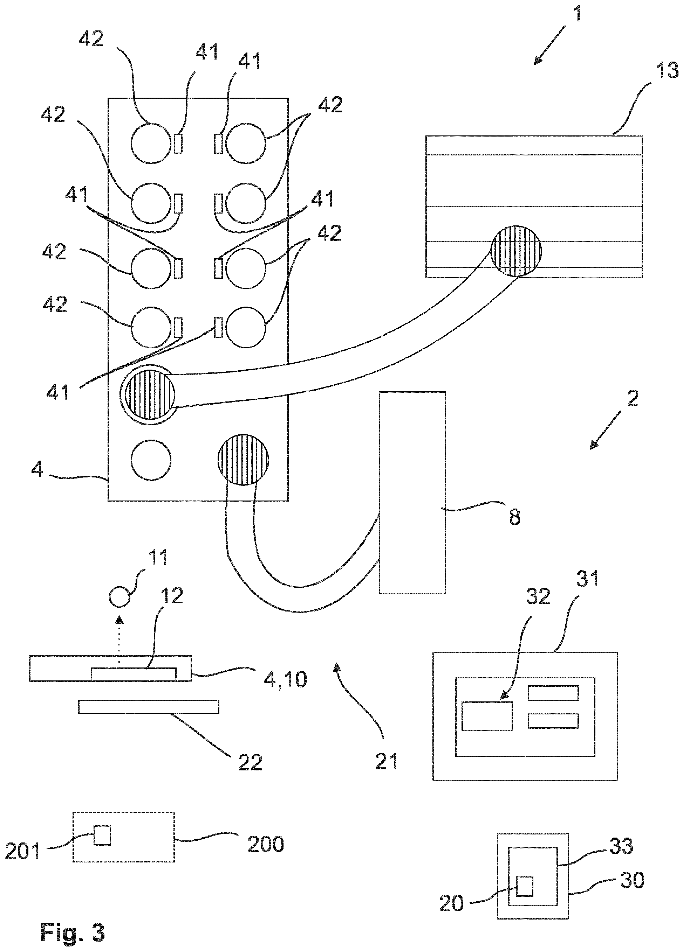

In Fig. 3 sind Teile eines Systems 2 gemäß Ausführungsbeispielen der Erfindung dargestellt, welches für eine computer-gestützte Installation von räumlich dezentral angeordneten Komponenten 4 einer Maschine 1 vorgesehen sein kann. Das System 2 kann eine Detektionsvorrichtung 22, insbesondere einen Scanner 22 oder eine Kamera 22, für eine Bereitstellung eines Identifikators 11 umfassen. Ferner kann das System 2 wenigstens eine Komponente 4, vorzugsweise in der Form eines Verbindungsmoduls 4 zur Verbindung mit dem Installationselement 10 und weiteren Installationselementen 10, aufweisen. Ebenfalls kann eine Vorrichtung 30 zur Datenverarbeitung Teil des Systems 2 sein, wobei diese Datenverarbeitungsvorrichtung 30 Mittel zur Ausführung der Schritte eines Verfahren 100 gemäß Ausführungsbeispielen der Erfindung umfassen kann.

Der Identifikator 11 kann in einem der Komponente 4 zugeordneten, insbesondere an diesem angeordneten, maschinenlesbaren Code 12 kodiert sein, wobei der maschinenlesbare Code 12 mittels der Detektionsvorrichtung 22 maschinenlesbar ausgeführt ist. Damit ist es für einen Benutzer möglich, mittels der Detektionsvorrichtung 22 den Code 12 einzuscannen und somit den Identifikator 11 an die Datenverarbeitungsvorrichtung 30 zu übertragen.

Ferner können die Komponenten 4 und wenigstens ein Computer 30, 31 und/oder eine Steuerungsvorrichtung 8 über ein Bussystem 21 jeweils zur bidirektionalen Kommunikation über ein Bussysten, z.B. ein Feldbussystem, miteinander verbunden sein, wobei die bidirektionale Kommunikation auf Basis eines Kommunikationsprotokolls für das Feldbussystem vorgesehen sein kann, insbesondere auf Basis eines ProfiNet-, EthernetCat, Ethernet/IP- oder 802.3-Standards, und/oder die bidirektionale Kommunikation kabelgebunden über ein Bussystem 21 oder kabellos mittels Bluetooth oder WLAN, auf Basis eines Standards gemäß IEEE 802.11 oder auf Basis eines Mobilfunk-Telekommunikationsstandards vorgesehen sein kann. Um einen Betrieb der Komponente 4 zu ermöglichen, kann die Komponente 4 ferner mit einer Energieversorgung 13 verbunden sein.

Ferner ist ein Computerprogramm 20 dargestellt, welches Befehle umfasst, die bei der Ausführung des Programms durch einen Computer 30 diesen veranlassen, die Schritte des Verfahrens 100 gemäß Ausführungsbeispielen der Erfindung auszuführen.

Ferner ist eine beispielhafte Installationsvorgabe 200 und ein darin abgebildeter Installationsort 201 einer Komponente 4 dargestellt.

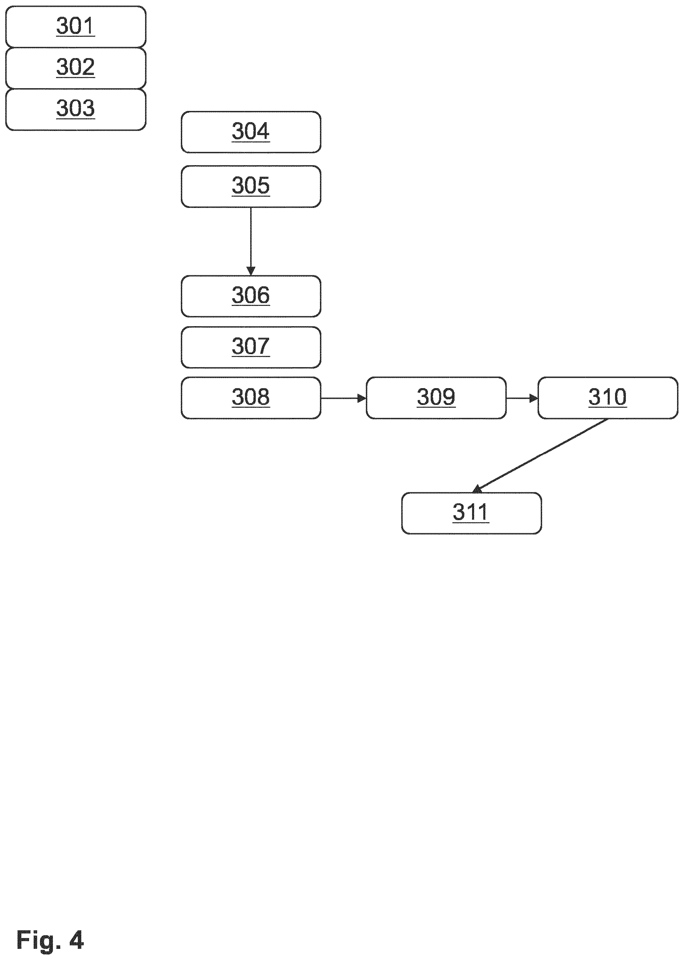

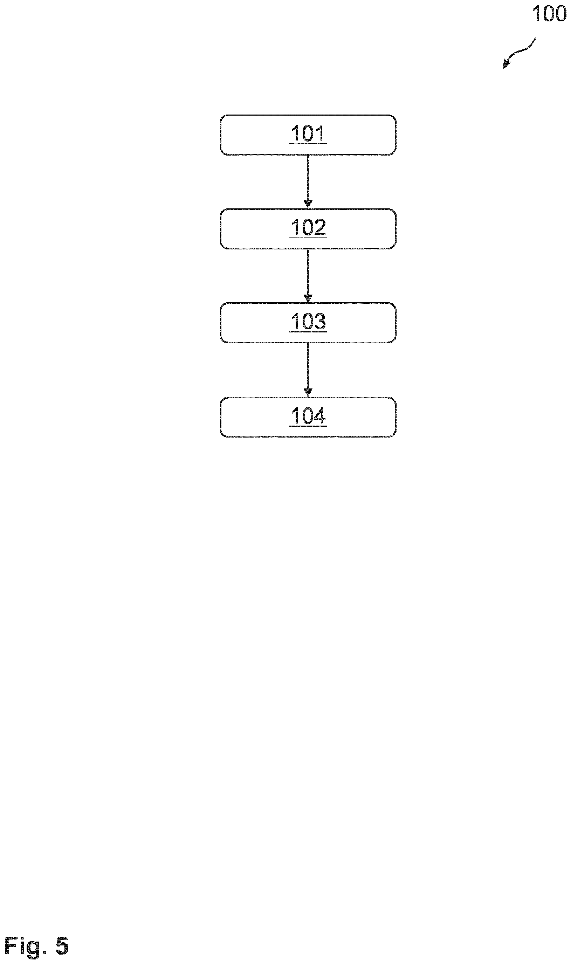

In Fig. 4 und 5 sind Verfahrensschritte des Verfahrens 100 visualisiert. Damit kann gemäß einem ersten Verfahrensschritt 101 ein Empfangen des Identifikators 11 der Komponente 4 vorgesehen sein. Anschließend kann gemäß einem zweiten Verfahrensschritt 102 ein Bereitstellen 102 einer Installationsvorgabe 200 erfolgen, welche eine Zuordnung der Komponente 4 zu einem oder mehreren Installationsorten der Maschine 1 spezifiziert. Sodann kann gemäß einem dritten Verfahrensschritt 103 ein Identifizieren 103 wenigstens eines Installationsvorschlags für die Installation der Komponente 4 auf Basis der bereitgestellten Installationsvorgabe 200 und des empfangenen Identifikators 11 durchgeführt werden, wobei durch das Identifizieren 103 der Installationsort oder die mehreren Installationsorte auf Basis einer Auswertung ausgewählt werden, wobei insbesondere nur ein Teil der Installationsorte ausgewählt wird, wobei durch den wenigstens einen Installationsvorschlag der ausgewählte Installationsort oder die mehreren ausgewählten Installationsorte angegeben werden. Dann ist gemäß einem vierten Verfahrensschritt 104 ein Initiieren einer Ausgabe wenigstens einer Installationsinformation basierend auf dem wenigstens einen identifizierten Installationsvorschlag möglich. Die wenigstens eine Installationsinformation kann dabei eine Installationsanweisung zur Unterstützung eines Benutzers bei der Installation umfassen.

Das Verfahren 100 kann wenigstens eine der folgenden Unterstützungsmöglichkeiten bereitstellen:
- Unterstützung des Benutzers bei der Installation, insbesondere der Installation von Komponenten und Verkabelung,
- Unterstützung des Benutzers bei der Dokumentation der Installation,
- Unterstützung des Benutzers beim Testing/automatisiertes Testing,
- Unterstützung des Benutzers bei der Demontage,
- Unterstützung des Engineerings bei der Planung,
- Unterstützung des SPS-Programmierers.

Das Initiieren der Ausgabe kann ein Initiieren einer Anzeige oder einer optischen Hervorhebung eines in Fig. 3 dargestellten Installationsorts 201 der Komponente 4 umfassen, um dadurch einen Installationsort, insbesondere einen ausgewählten Installationsort 201, für die zu verbindende Komponente 4 anzuzeigen. Alternativ oder zusätzlich kann das Initiieren der Ausgabe ein Initiieren einer Anzeige eines Installationsorts der Komponente 4 auf einer Benutzeroberfläche 32 eines Computers 31 umfassen. Die Benutzeroberfläche 32 kann dabei einen digitalen Zwilling zumindest eines Teils der Maschine 1, und vorzugsweise einen mechanischen und/oder einen elektrischen Anschlussplan des Teils der Maschine 1 visualisieren. Weitere Alternativen oder zusätzliche Möglichkeiten zur Ausgabe sind eine Anzeige eines Installationsorts 201, der Komponente 4 mittels Erweiterter Realität und/oder eine Ausgabe der Installationsanweisung als eine Anweisung für den Benutzer, die Komponente 4 an einen bestimmten Installationsort 201 anzuschließen. Darüber hinaus kann auch eine akustische Ausgabe der Installationsanweisung vorgesehen sein, sodass ein Benutzer ohne Sicht auf den Computer 31 der Installationsanweisung folgen kann. Hierbei wird z. B. eine Kennung des ausgewählten Installationsorts 201 der Komponente 4 sprachlich ausgegeben.

Es ist zudem möglich, dass die Installationsinformation eine Installationskonfiguration und/oder eine Installationsdokumentation umfasst, welche in einem Datenspeicher 33 hinterlegt und/oder an die Komponente 4 übertragen wird.

Um Fehler in der Dokumentation zu vermeiden, die beim manuellen Eintragen der Informationen entstehen können, kann eine automatisierte Hinterlegung im System vorteilhaft sein. Dazu werden bspw. in den unterschiedlichen Dokumenten der Installationsvorgabe, wie beispielsweise dem Schaltplan oder dem Anschlussplan, sämtliche Informationen an der richtigen Stelle abgelegt. Die den jeweiligen Schritt ausführende Person muss die Eintragungen dann z. B. nur noch quittieren.

Zu den relevanten Informationen, welche die Installationsdokumentation umfassen kann, zählen beispielsweise:
- Welche Komponente wurde verwendet (eindeutige, vorzugsweise eineindeutige Kennung)?
- An welcher Maschine und an welchem Installationsort der Maschine wurde das konkrete Bauteil angebracht?
- Von wem wurde es wann angeschlossen?
- Wie wurde das Kabel angeschlossen?
- Wurde das Bauteil ordnungsgemäß angeschlossen?
- Gab es Abweichungen zum Plan?

Durch die Installationsdokumentation kann z. B. wenigstens einer der folgenden Informationen dokumentiert werden: Arbeitsschritte des Benutzers mit Zusatzinformationen zu den Arbeitsschritten wie eine Bearbeitungsdauer, an welcher Maschine wird gearbeitet, welcher Benutzer, beispielsweise welcher Installateur oder Monteur, hat wann die Tätigkeiten durchgeführt, welches Bauteil ist verdrahtet und/ oder verkabelt worden, ist der Montageschritt abgeschlossen, welcher Port/welche Anschlussstelle wurde verwendet, existieren offene Kabel und was sind die Eigenschaften des offenen Kabels, z.B. Länge, Umgebungsparameter, z.B. Temperatur, Luftfeuchtigkeit, Beschleunigung, Emissionen, aktueller Projektstand, Schutzklasse, z.B. IP67, auch kann der Benutzer, insbesondere Werker, bei Planabweichungen den Grund der Planabweichung eingeben. Die Installationsdokumentation kann bspw. in einer Datenbank hinterlegt werden. Ein Benutzer kann ggf. mit physischen Handlungen (Tastendruck, Bildschirm, Doppelklick), die Dokumentation auslösen.

Ferner kann eine Auswerteeinheit vorgesehen sein, welche die dokumentierten Informationen, vorzugsweise die Bearbeitungsdauern des Benutzers zu den jeweiligen Arbeitsschritten, auswertet. Hierzu kann auch eine Methode einer künstlichen Intelligenz verwendet werden, welche bspw. die Ergebnisse der Auswerteeinheit optimiert. Die Ergebnisse zeigen dem Benutzer Optimierungspotenziale auf, um zukünftig eine Maschine effizienter zu gestalten, Komponenten oder Baugruppen zu optimieren und Auf- und Abbauabläufe zu verbessern. Ferner werden die Kommentare bei Planabweichungen berücksichtigt.

Dabei ist es auch möglich, dass die Dokumentation mit Komponenten funktioniert, welche nicht vorkonfiguriert oder an einer SPS angeschlossen sind. Dadurch werden Fehler vermieden, die durch die Verwendung äußerlich baugleicher, aber unterschiedlich konfigurierter Module entstehen können. Durch die Kommunikationsfähigkeit dieser Komponenten und durch die Integration sämtlicher relevanter Informationen kann das System auch dazu verwendet werden, den Benutzer bei der Installation der Automatisierungstechnik anzuleiten. Das systematische Sammeln und Dokumentieren aller relevanten Informationen, beispielsweise die verwendeten Komponenten, die Ausführung von Installations- und Wartungsaufgaben oder eingetretene Problemfälle, führen ferner zu gesichertem Wissen über den gegenwärtigen Systemzustand. Durch das automatisierte Erheben und Zuordnen dieser Informationen wird der Prozess deutlich beschleunigt und menschliche Installateure werden von der Dokumentationsaufgabe entlastet. Durch das automatisierte Erheben und Speichern von zu dokumentierenden Informationen kann das Risiko fehlender und/oder falscher Dokumentationen deutlich reduziert werden.

In Fig. 4 ist ein Verfahren 100 mit weiteren Einzelheiten visualisiert. Über einen in Fig. 3 dargestellten Computer 31, wie ein Tablet oder Laptop, kann ein Benutzer zunächst eine Nutzeranmeldung 301 durchführen. Hierzu kann der Nutzer eine grafische Benutzeroberfläche 32 nutzen, welche durch den Computer 31 bereitgestellt wird. Ebenfalls über die Benutzeroberfläche 32 kann eine Projektauswahl 302 erfolgen, durch welche bspw. eine Installationsvorgabe 200 für ein gewünschtes Projekt geladen wird. Damit ist es möglich, einen Beginn 303 für eine Anleitung des Benutzers zur Installation der Maschine 1 mittels wenigstens einer Installationsanweisung einzuleiten. Optional kann nach dem Beginn 303 zunächst eine Darstellung 304 des letzten ausgeführten Schrittes erfolgen, bspw. der letzten Installationsanweisung und/oder einer anderen Anweisung für die Installation. Zunächst kann eine Identifikation 305 einer Komponente 4 durch den Benutzer erfolgen, wobei der Benutzer hierzu bspw. eine Detektionsvorrichtung 22 wie einen Handscanner zum Scannen eines Identifikationsmittels 12 an der Komponente 4 nutzt. Anhand des gescannten Identifikationsmittels 12 kann dann der Identifikator 11 ermittelt werden und an den Computer 31 und/oder eine Vorrichtung 30 zur Datenverarbeitung übertragen werden. Anhand des empfangenen Identifikators 11 und der Installationsvorgabe 200 kann dann ein Installationsort für die Komponente 4 identifiziert werden, an welchem die Komponente 4 angeschlossen werden soll. Hierzu umfasst die Installationsvorgabe 200 bspw. einen elektrischen Anschlussplan 200, in welchem verschiedene Komponenten 4 Installationsorten zugeordnet werden. Sodann kann dem Benutzer durch die Installationsanweisung mitgeteilt werden, welche der Komponenten 4 hierbei für welchen Installationsort oder für welche Installationsorte in der Installationsvorgabe 200 identifiziert wurde. Hierzu wird der Installationsvorschlag in dem Anschlussplan 200 optisch angezeigt. Anschließend kann durch den Benutzer eine Verbindung 306 zwischen der Komponente 4 und dem Bussystem hergestellt werden. Anhand der Installationsvorgabe 200 kann eine Bestätigung 307 der korrekten Montage erfolgen. Anschließend ist ggf. eine zumindest teilweise automatisierte Dokumentation 308 der korrekten Montage und Dokumentation 309 der Erledigung des Arbeitsschritts in der Installationsvorgabe 200 möglich. Dies kann z. B. durch eine Darstellung 310 in einer Maschinenübersicht mit einem grünen Haken oder z.B. durch ein Einblenden der betroffenen Verbindung in einem Elektroschaltplan erfolgen und dem Benutzer über die Benutzeroberfläche 32 dargestellt werden. Anschließend kann erneut eine Identifikation einer Komponente 312 durchgeführt werden. Durch die Anleitung des Benutzers, insbesondere Werkers, bei der Installation der elektrischen Automatisierungstechnik und durch die automatisierte Prüfung, ob eine geeignete Komponente ordnungsgemäß angeschlossen wurde, kann eine fehlerfreie Herstellung des zu installierenden Systems sichergestellt werden.

Danach kann durch den Benutzer eine Verbindung zwischen der Komponente und einem Installationselement und dann einem Gerät, wie beispielsweise einem Aktor und/oder einem Hub und/oder einem Sensor, hergestellt werden (nicht abgebildet). Anschließend ist ggf. eine zumindest teilweise automatisierte Dokumentation der korrekten Montage und Dokumentation der Erledigung des Arbeitsschritts in der Installationsvorgabe 200 möglich. Dies kann z. B. durch eine Darstellung in einer Maschinenübersicht mit einem grünen Haken oder z.B. durch ein Einblenden der betroffenen Verbindung in einem Elektroschaltplan erfolgen und dem Benutzer über die Benutzeroberfläche 32 dargestellt werden. Diese Arbeitsschritte entsprechen prinzipiell den Arbeitsschritten 307 bis 311.

Das System 2 kann ferner wenigstens eine Informationsschnittstelle aufweisen, um die Verfahrensschritte eines Verfahrens 100 bereitstellen zu können. Die wenigstens eine Informationsschnittstelle kann wenigstens eine der nachfolgenden Informationsschnittstellen zur Übermittlung von Informationen umfassen:
- Zwischen dem System 2 und dem Benutzer, insbesondere einen Werker und/oder einen Planer und/oder einen Programmierer, bspw. zur Übermittlung von Arbeitsanweisungen und/oder Projektständen und/oder zur Optimierung der Planung,
- Zwischen dem Benutzer und dem System 2, z. B. zur Übermittlung von Quittierungen der ausgeführten Arbeitsschritte und/oder Kommentare zu den ausgeführten Arbeitsschritten,
- Zwischen dem System 2 und den Komponenten 4,
- Zwischen dem System 2 über eine Komponente 4 zu einem oder mehreren Geräten 5 wie Aktoren und/oder Sensoren,
- Zwischen dem System 2 über eine Komponente 4 zu einem Hub 6.

Eine Übermittlung der Informationen kann als ein bidirektionaler Informationstransfer zwischen dem System 2 und den Komponenten 4 ausgeführt sein. Dieser kann durchgeführt werden, ohne dass die einzelnen Komponenten 4 an ein Steuerungssystem der Maschine 1 (SPS 8) angeschlossen und /oder für ihre zukünftige Aufgaben in der Maschine 1 vorkonfiguriert sind.

In einem weiteren Beispiel im Rahmen der Installation einer Maschine scannt bzw. erfasst der Benutzer nach der Nutzeranmeldung 301 mit einem Scanner 22 als Lesevorrichtung 22 den Identifikator 11 einer Komponente 4. Der Identifikator 11 umfasst dabei z. B. eine Serien- und/oder Artikelnummer 11 der Komponente 4. Auf Basis des Identifikators 11 bzw. der Serien- und/oder Artikelnummer 11 erfolgt eine Zuordnung und Auswahl eines Installationsorts 201 in der Installationsvorgabe 200, zum Beispiel in einem Anschlussplan 200. Dabei kann der ausgewählte Installationsort 201 einem solchen Installationsort 201 entsprechen, welcher in einer Planungsphase der Installation durch einen Planer mit einer entsprechenden Serien- und/oder Artikelnummer versehen wurde. Mit anderen Worten wird nach dem Empfangen des Identifikators 11 analysiert, ob in der Installationsvorgabe 200 eine zum gescannten Identifikator 11 passende Serien- und/oder Artikelnummer an einem oder mehreren Installationsorten 201 vorhanden ist. Wenn die passende Serien- und/oder Artikelnummer vorhanden ist, wird der Installationsort oder es werden die mehreren ausgewählten Installationsorte 201 als Installationsvorschlag dem Benutzer ausgegeben. Der Benutzer kann nun die Komponente 4 gemäß Installationsvorschlag an dem ausgewählten Installationsort 201 oder an dem ausgewählten aus den mehreren Installationsorten 201 anschließen. Daraufhin werden für die Komponente 4, 5, 6 eine Seriennummer und/oder eine MAC-Adresse zugewiesen und im Anschlussplan dokumentiert und gespeichert. Damit ist die angeschlossene Komponente 4 dem Installationsort 201 eindeutig zugewiesen.

Es besteht ferner die Möglichkeit, dass der Komponente 4, 5, 6 insbesondere einem Verbindungsmodul 4, einem Hub 6 oder einem Sensor5 und/oder Aktor 5, insbesondere einem IO-Link Device ein Name, ein Application specific tag oder weitere Kennungen zugewiesen werden können. Nach dem Anschluss der Komponente 4 kann der Benutzer nun auch auf technische Eigenschaften der angeschlossenen Komponente 4 zugreifen. Diesen Zugriff ermöglicht z. B. eine hinterlegte Produktdatenbank, welche über eine Schnittstelle mit der Installationsvorgabe 200 kommunikativ verbunden ist, wobei die Produktdatenbank Produkte sowie deren jeweiligen technischen Eigenschaften umfasst und diese Informationen über die Schnittstelle bereitstellen kann. Die Produkte können dabei in der Produktdatenbank nach Serien- und/oder Artikelnummern, beispielsweise von unterschiedlichen Komponenten 4 und/oder Installationselementen 10, aufgelistet sein. Somit ist es dem Benutzer möglich, aufgrund der Zuordnung der Serien- und/oder Artikelnummer der Komponente zum Installationsort 201 auf technische Eigenschaften der Komponente zuzugreifen. Optional ist vorgesehen, dass die technischen Eigenschaften als Identifikator 11, beispielsweise als maschinenlesbarer Code, einem Installationselement 10 oder Kabel 10 nachträglich zugeordnet werden können. Dabei kann die Zuordnung mittels eines Anordnens bzw. Aufbringens des Identifikators an dem Installationselement erfolgen.

In einem weiteren Beispiel kann der Identifikator 11 einer Komponente 4 von dem Benutzer gescannt werden, um sich die technischen Eigenschaften anzeigen zulassen. Er kann dann initiieren, dass das System 2 ein Installationselement oder ein Gerät in einer Produktdatenbank sucht, welches zumindest teilweise die technischen Eigenschaften bzw. Anforderungen erfüllt, und anschließend eine Installationsinformation dazu ausgeben. Es ist optional weiter möglich, dass der Benutzer den Identifikator einer Komponente 4 oder eines Installationselements ausliest. Anhand eines Abgleichs der angezeigten technischen Eigenschaften der Komponente 4 und des Installationsorts 201 kann dann eine Installationsinformation ausgegeben werden, die den Benutzer anzeigt, ob die gescannte Komponente 4 für den Installationsort 201 technisch geeignet ist und/oder die technischen Anforderungen zumindest teilweise erfüllt und/oder ob mehr als die am Installationsort 201 erforderlichen technischen Eigenschaften erfüllt werden. In dem Fall, dass zum Beispiel ein Installationselement oder ein Gerät wie ein Aktor und/oder Sensor mit einer Komponente 4 verbunden werden soll, kann auf Basis des vorgenannten Abgleichs der technischen Informationen der Komponente 4 und des Installationselements oder des Geräts ein Verbinden des Installationselements mit der Komponente 4 erfolgen.

Es ist möglich, dass der Benutzer nach der Nutzeranmeldung 301 die grafische Benutzerfläche 32 benutzt, um eine Installationsvorgabe 200, insbesondere einen Anschlussplan 200, aufzurufen, um eine Überprüfung von ausgeführten Aufgaben eines oder mehrerer Benutzer durchzuführen. Dies kann beispielsweise nach einer abgeschlossenen Installation einer Maschine, im Rahmen einer Wartung und/oder Inspektion erfolgen. Der Benutzer kann den Scanner 22 oder die Kamera 22 ggf. dazu verwenden, um den Identifikator 11 einer Komponente 4 auszulesen. Es können dem Benutzer daraufhin technische Informationen zu der Komponente 4, wie z. B. eine Seriennummer und/oder eine MAC-Adresse, angezeigt werden. Des Weiteren können auf Basis des ausgelesenen Identifikators technische Eigenschaften der Komponente 4, welche an der Maschine installiert ist, angezeigt werden.

Es ist auch möglich, dass die vorgenannten Schritte zumindest teilweise remote bzw. ferngesteuert von einem mit der Maschine 1 verbundenen Computer erfolgen können. Anschließend kann der Benutzer nun den Identifikator 11 eines an der Komponente 4 angeschlossenen Installationselements 10 auslesen, wobei daraufhin die technischen Eigenschaften des an der Komponente 4 angeschlossenen Installationselements 10 auf dem Computer 32 angezeigt werden. Nun kann das System 2 beispielsweise die jeweiligen technischen Eigenschaften der Komponente 4 und des angeschlossenen Installationselements 10 vergleichen und prüfen bzw. validieren, ob die Eigenschaften übereinstimmen oder ob eine oder mehrere technische Eigenschaften abweichen. Dies ermöglicht eine einfache Überprüfung von möglichen Installationsfehlern im Rahmen der Qualitätssicherung und versetzt den Benutzer mittels des Systems 2 in die Lage, Korrekturen bezüglich der Installation zu veranlassen. Der Benutzer kann dann beispielsweise eine Kennzeichnung und eine Installationsinformation als einen Hinweis für den ausgewählten Installationsort dokumentieren und hinterlegen. Ferner kann er eine entsprechende Installationsanweisung, z. B. eine Korrekturaufgabe für die Beseitigung des Installationsfehlers, anlegen, die zum Beispiel ein anderer Benutzer im Anschluss an die Überprüfung ausführen kann.

Obwohl einige Aspekte im Zusammenhang mit einer Vorrichtung beschrieben wurden, ist es klar, dass diese Aspekte auch eine Beschreibung des entsprechenden Verfahrens darstellen, wobei ein Element oder eine Vorrichtung einem Verfahrensschritt oder einem Merkmal eines Verfahrensschritts entspricht. Analog dazu stellen Aspekte, die im Zusammenhang mit einem Verfahrensschritt beschrieben werden, auch eine Beschreibung eines entsprechenden Blocks oder Elements oder Merkmals eines entsprechenden Geräts dar.

Ausführungsformen der Erfindung können auf einem Computersystem implementiert werden. Bei dem Computersystem kann es sich um ein lokales Computergerät (z. B. Personalcomputer, Laptop, Tablet-Computer oder Mobiltelefon) mit einem oder mehreren Prozessoren und einem oder mehreren Speichergeräten handeln oder um ein verteiltes Computersystem (z. B. ein Cloud-Computersystem mit einem oder mehreren Prozessoren und einem oder mehreren Speichergeräten, die an verschiedenen Orten verteilt sind, z. B. bei einem lokalen Client und/oder einer oder mehreren entfernten Serverfarmen und/oder Datenzentren). Das Computersystem kann jede beliebige Schaltung oder Kombination von Schaltungen umfassen. In einer Ausführungsform kann das Computersystem einen oder mehrere Prozessoren beliebiger Art umfassen. Der hier verwendete Begriff "Prozessor" kann jede Art von Rechenschaltung bezeichnen, z. B. einen Mikroprozessor, einen Mikrocontroller, einen CISC-Mikroprozessor (Complex Instruction Set Computing), einen RISC-Mikroprozessor (Reduced Instruction Set Computing), einen VLlW-Mikroprozessor (Very Long Instruction Word), einen Grafikprozessor, einen digitalen Signalprozessor (DSP), einen Mehrkernprozessor, ein FPGA (Field Programmable Gate Array) oder jede andere Art von Prozessor oder Verarbeitungsschaltung. Andere Arten von Schaltkreisen, die im Computersystem enthalten sein können, können ein kundenspezifischer Schaltkreis, ein anwendungsspezifischer integrierter Schaltkreis (ASIC) oder ähnliches sein, wie z. B. ein oder mehrere Schaltkreise (z. B. ein Kommunikationsschaltkreis) zur Verwendung in drahtlosen Geräten wie Mobiltelefonen, Tablet-Computern, Laptop-Computern, Zwei-Wege-Funkgeräten und ähnlichen elektronischen Systemen. Das Computersystem kann eine oder mehrere Speichervorrichtungen enthalten, die ein oder mehrere für die jeweilige Anwendung geeignete Speicherelemente umfassen können, wie z. B. einen Hauptspeicher in Form eines Direktzugriffsspeichers (RAM), eine oder mehrere Festplatten und/oder ein oder mehrere Laufwerke, die Wechseldatenträger wie Compact Disks (CD), Flash-Speicherkarten, digitale Videodisks (DVD) und dergleichen verarbeiten. Das Computersystem kann auch ein Anzeigegerät, einen oder mehrere Lautsprecher und eine Tastatur und/oder ein Steuergerät enthalten, das eine Maus, einen Trackball, einen Touchscreen, ein Spracherkennungsgerät oder ein anderes Gerät umfassen kann, das es einem Systembenutzer ermöglicht, Informationen in das Computersystem einzugeben und Informationen von ihm zu empfangen.

Einige oder alle Verfahrensschritte können von einem Hardware-Gerät (oder unter Verwendung eines solchen) ausgeführt werden, wie z. B. einem Prozessor, einem Mikroprozessor, einem programmierbaren Computer oder einer elektronischen Schaltung. In einigen Ausführungsformen können einige oder mehrere der wichtigsten Verfahrensschritte von einem solchen Gerät ausgeführt werden.

Abhängig von bestimmten Implementierungsanforderungen können Ausführungsformen der Erfindung in Hardware oder in Software implementiert werden. Die Implementierung kann unter Verwendung eines nicht-übertragbaren Speichermediums wie eines digitalen Speichermediums, beispielsweise einer Diskette, einer DVD, einer Blu-Ray, einer CD, eines ROM, eines PROM, eines EPROM, eines EEPROM oder eines FLASH-Speichers erfolgen, auf dem elektronisch lesbare Steuersignale gespeichert sind, die mit einem programmierbaren Computersystem zusammenwirken (oder zusammenwirken können), so dass das jeweilige Verfahren durchgeführt wird. Daher kann das digitale Speichermedium computerlesbar sein.

Einige Ausführungsformen umfassen einen Datenträger mit elektronisch lesbaren Steuersignalen, die in der Lage sind, mit einem programmierbaren Computersystem zusammenzuarbeiten, so dass eines der hier beschriebenen Verfahren durchgeführt wird.

Im Allgemeinen können Ausführungsformen der vorliegenden Erfindung als Computerprogrammprodukt mit einem Programmcode implementiert werden, wobei der Programmcode zur Durchführung eines der Verfahren dient, wenn das Computerprogrammprodukt auf einem Computer läuft. Der Programmcode kann zum Beispiel auf einem maschinenlesbaren Träger gespeichert sein.

Andere Ausführungsformen umfassen das Computerprogramm zur Durchführung eines der hier beschriebenen Verfahren, das auf einem maschinenlesbaren Träger gespeichert ist. Mit anderen Worten, eine Ausführungsform der vorliegenden Erfindung ist daher ein Computerprogramm mit einem Programmcode zur Durchführung eines der hierin beschriebenen Verfahren, wenn das Computerprogramm auf einem Computer läuft.

Eine weitere Ausführungsform ist ein Speichermedium (oder ein Datenträger oder ein computerlesbares Medium), auf dem das Computerprogramm zur Durchführung eines der hierin beschriebenen Verfahren gespeichert ist, wenn es von einem Prozessor ausgeführt wird. Der Datenträger, das digitale Speichermedium oder das aufgezeichnete Medium sind typischerweise greifbar und/oder nicht-übertragbar. Eine weitere Ausführungsform der vorliegenden Erfindung ist ein Gerät, wie hierin beschrieben, mit einem Prozessor und dem Speichermedium.

Eine weitere Ausführungsform ist ein Datenstrom oder eine Folge von Signalen, die das Computerprogramm zur Durchführung eines der hierin beschriebenen Verfahren darstellen. Der Datenstrom bzw. die Signalfolge kann beispielsweise so ausgestaltet sein, dass er bzw. sie über eine Datenkommunikationsverbindung, z.B. über das Internet, übertragen werden kann.

Eine weitere Ausführungsform umfasst ein Verarbeitungsmittel, z. B. einen Computer oder ein programmierbares Logikgerät, das so konfiguriert oder angepasst ist, dass es eines der hierin beschriebenen Verfahren durchführen kann.

Eine weitere Ausführungsform umfasst einen Computer, auf dem das Computerprogramm zur Durchführung eines der hierin beschriebenen Verfahren installiert ist.

Eine weitere Ausführungsform der Erfindung umfasst eine Vorrichtung, die so konfiguriert ist, dass sie bzw. es ein Computerprogramm zur Durchführung eines der hierin beschriebenen Verfahren an einen Empfänger überträgt (z. B. auf elektronischem oder optischem Weg). Bei dem Empfänger kann es sich beispielsweise um einen Computer, ein mobiles Gerät, ein Speichergerät oder dergleichen handeln. Die Vorrichtung oder das System kann zum Beispiel einen Dateiserver zur Übertragung des Computerprogramms an den Empfänger umfassen.

In einigen Ausführungsformen kann eine programmierbare Logikvorrichtung (z. B. ein feldprogrammierbares Gate-Array) verwendet werden, um einige oder alle Funktionen der hier beschriebenen Verfahren auszuführen. In einigen Ausführungsformen kann ein feldprogrammierbares Gate-Array mit einem Mikroprozessor zusammenarbeiten, um eines der hier beschriebenen Verfahren durchzuführen. Im Allgemeinen werden die Verfahren vorzugsweise von einem beliebigen Hardware-Gerät durchgeführt.

### Liste der Bezugszeichen

- 1: Maschine, Anlage
- 2: System
- 3: Mastermodul
- 4: Komponente, Verbindungsmodul, Modul, Switch,
- 5: Geräte, Sensor, Aktor
- 6: Hub
- 8: Steuerungsvorrichtung, SPS
- 9: Schaltschrank

- 10: Installationselement
- 11: Identifikator
- 12: Identifikationsmittel, maschinenlesbarer Code
- 13: Energieversorgung

- 20: Computerprogramm
- 21: Bussystem
- 22: Detektionsvorrichtung

- 30: Vorrichtung
- 31: Computer
- 32: Benutzeroberfläche
- 33: Datenspeicher

- 41: Anzeigeelement
- 42: Anschlussstelle, Steckplatz

- 100: Verfahren
- 101: erster Verfahrensschritt
- 102: zweiter Verfahrensschritt
- 103: dritter Verfahrensschritt
- 104: vierter Verfahrensschritt
- 200: Installationsvorgabe
- 201: Installationsort

- 301: Nutzeranmeldung
- 302: Projektauswahl
- 303: Beginn Anleitung
- 304: Darstellung letzter ausgeführter Schritt
- 305: Identifikation einer Komponente, insbesondere Verbindungsmoduls
- 306: Verbindung zwischen Komponente und Bussystem hergestellt
- 307: Bestätigung korrekte Montage
- 308: Dokumentation korrekte Montage
- 309: Dokumentation Arbeitsschritt erledigt
- 310: Darstellung Maschinenübersicht
- 311: Identifikation einer Komponente

## Patentansprüche

1. Ein Verfahren (100) für eine computer-gestützte Installation von räumlich dezentral angeordneten Komponenten (4) einer Maschine (1), umfassend:
Empfangen (101) eines Identifikators (11) einer Komponente (4),
Bereitstellen (102) einer Installationsvorgabe (200), welche eine Zuordnung der Komponente (4) zu einem oder mehreren Installationsorten (201) der Maschine (1) spezifiziert;
Identifizieren (103) wenigstens eines Installationsvorschlags für die Installation der Komponente (4) auf Basis der bereitgestellten Installationsvorgabe (200) und des empfangenen Identifikators (11), wobei der Installationsort (201) oder die mehreren Installationsorte (201) auf Basis einer Auswertung ausgewählt werden, wobei durch den wenigstens einen Installationsvorschlag der ausgewählte Installationsort (201) oder die mehreren ausgewählten Installationsorte (201) angegeben werden; und
Initiieren (104) einer Ausgabe wenigstens einer Installationsinformation basierend auf dem wenigstens einen identifizierten Installationsvorschlag,
wobei das Identifizieren (103) des wenigstens einen Installationsvorschlags die nachfolgenden Schritte umfasst:
Ermitteln wenigstens einer technischen Eigenschaft der Komponente (4) auf Basis des empfangenen Identifikators (11);
Ermitteln wenigstens einer technischen Anforderung des wenigstens einen Installationsorts (201) an die Komponente (4) auf Basis der bereitgestellten Installationsvorgabe (200);
Durchführen der Auswertung, bei welcher abgeglichen wird, ob für den jeweiligen Installationsort (201) die wenigstens eine technische Eigenschaft der Komponente (4) die wenigstens eine technische Anforderung erfüllt;
Auswählen des oder derjenigen Installationsorte (201), für welche die Erfüllung der Anforderung festgestellt wird.

2. Das Verfahren (100) nach Anspruch 1, wobei die wenigstens eine Installationsinformation eine Installationsanweisung zur Unterstützung eines Benutzers bei der Installation umfasst, wobei das Initiieren (104) der Ausgabe zumindest einen der nachfolgenden Schritte umfasst:
Initiieren einer Anzeige des wenigstens einen ausgewählten Installationsorts (201) für die Komponente (4) auf einer Benutzeroberfläche (32) eines Computers (31), wobei die Benutzeroberfläche (32) einen digitalen Zwilling zumindest eines Teils der Maschine (1) visualisiert, und eine Topologie und/oder einen mechanischen und/oder einen elektrischen Anschlussplan des Teils der Maschine (1) visualisiert;
Initiieren einer Anzeige des wenigstens einen ausgewählten Installationsorts (201) der Komponente (4) mittels Erweiterter Realität;
Initiieren einer Ausgabe der Installationsanweisung als eine Anweisung für den Benutzer, einen gewünschten Installationsort (201) aus einer Liste der mehreren ausgewählten Installationsorte (201) für die Installation zu verwenden und/oder die Komponente (4) an dem Installationsort (201) zu montieren;
Initiieren einer akustischen Ausgabe der Installationsanweisung;
Initiieren einer grafischen Anzeige der Installationsanweisung,
Initiieren einer grafischen Anzeige einer Liste der mehreren ausgewählten Installationsorten (201) basierend auf dem Installationsvorschlag.

3. Das Verfahren (100) nach einem der vorhergehenden Ansprüche, wobei die wenigstens eine Installationsinformation für die computer-gestützte Installation zumindest dadurch verwendet wird, dass die Installationsinformation eine Angabe des wenigstens einen Installationsortes (201) umfasst, an welchem eine Verbindung der Komponente (4) mit einer weiteren Komponente (4) und/oder einem Installationselement (10) wie einem Kabel möglich ist, wobei das Verfahren (100) den folgenden weiteren Schritt umfasst:
Ermitteln eines Verbindungszustands der Komponente (4), um festzustellen, ob die Verbindung hergestellt wurde, wobei das Ermitteln des Verbindungszustands umfasst:
Empfangen einer Installationsnachricht auf Basis einer Eingabe des Benutzers und/oder von der Komponente (4),
wobei die empfangene Installationsnachricht indiziert, dass die Verbindung der Komponente (4) hergestellt wurde.

4. Das Verfahren (100) nach einem der vorhergehenden Ansprüche, wobei das Verfahren (100) die folgenden weiteren Schritte umfasst:
Verifizieren des ausgewählten Installationsorts (201) der Komponente (4) auf Basis des empfangenen Identifikators (11) und der Installationsvorgabe (200),wobei in Abhängigkeit von dem Verifizieren eine Kennzeichnung für die Installationsvorgabe (200) hinterlegt wird, und im Falle einer positiven Verifikation der nachfolgende Schritt durchgeführt wird:
Hinterlegen der Kennzeichnung des Installationsorts (201) als korrekt ausgewählter Installationsort (201) in der Installationsvorgabe (200);
wobei im Falle einer negativen Verifikation zumindest einer der nachfolgenden Schritte durchgeführt wird:
Hinterlegen einer Kennzeichnung des Installationsorts (201) als geänderter ausgewählter Installationsort (201) in der Installationsvorgabe (200), und:
Initiieren einer Korrektur des ausgewählten Installationsorts (201) gemäß der Installationsvorgabe (200).

5. Das Verfahren (100) nach einem der vorhergehenden Ansprüche, wobei die wenigstens eine Installationsinformation eine Installationsanweisung zur Unterstützung eines Benutzers bei einem Wiederaufbau der Maschine (1) umfasst, wobei das Initiieren der Ausgabe zumindest den nachfolgenden Schritt umfasst:
Initiieren einer Ausgabe einer Installationsreihenfolge mittels der wenigstens einen Installationsinformation für die Installation der Maschine (1).

6. Das Verfahren (100) nach einem der vorhergehenden Ansprüche, wobei die Installationsinformation eine Installationskonfiguration und/oder eine Installationsdokumentation umfasst, für eine Demontage und/oder einen Wiederaufbau der Maschine (1), welche in einem Datenspeicher (33) hinterlegt und/oder an die Komponente (4) übertragen wird.

7. Das Verfahren (100) nach einem der vorhergehenden Ansprüche, wobei die Anforderung eine Anforderung für die Installation, für eine Verbindung der Komponente (4) an dem wenigstens einen Installationsort (201) ist.

8. Das Verfahren (100) nach einem der vorhergehenden Ansprüche, wobei der nachfolgende Schritt vorgesehen ist:
Auswählen des oder derjenigen Installationsorte (201), für welche die Erfüllung der Anforderung nur teilweise festgestellt wird, wobei eine Installationsweisung mit einer Angabe von Handlungen und/oder Hinweisen generiert wird, um die Installation der Komponente (4) dennoch am Installationsort (201) vorzunehmen; und/oder
wobei in Abhängigkeit von dem Abgleich eine Rangliste der ausgewählten Installationsorte (201) bestimmt wird.

9. Das Verfahren (100) nach Anspruch 8, wobei das Ermitteln der wenigstens einen technischen Eigenschaft der Komponente (4) ferner umfasst:
Auslesen der technischen Eigenschaft aus einer Datenbank; und/oder wobei das Ermitteln der wenigstens einen technischen Anforderung umfasst:
Ermitteln einer Kennzeichnung in der Installationsvorgabe (200), wobei die Kennzeichnung mit vorgegebenen technischen Eigenschaften korreliert;
Auslesen der vorgegebenen technischen Eigenschaften anhand der Kennzeichnung aus einer Datenbank, um die technischen Anforderungen zu ermitteln;
wobei das Verfahren (100) zumindest einen der nachfolgenden, weiteren Schritte umfasst:
Generieren eines weiteren Identifikators für die Komponente (4), um zu kennzeichnen, dass die konkrete Komponente (4) an dem Installationsort (201) installiert wurde;
Erweitern der Installationsvorgabe (200) um den Identifikator (11) und/oder um eine weitere Spezifikation der Komponente (4), zugewiesen zu dem ausgewählten Installationsort (201), welcher für die Installation der Komponente (4) durch einen Benutzer verwendet wird.

10. Das Verfahren (100) nach einem der vorhergehenden Ansprüche, wobei wenigstens eine der nachfolgenden Spezifikationen empfangen wird, um basierend auf dem empfangenen Identifikator (11) und des ausgewählten Installationsorts (201) einen digitalen Zwilling der Komponente (4) zu erstellen: Komponententyp, Maschinentyp, Anlagentyp, Benutzer, Benennung, Name, Stationsname, Zeitstempel wie Datum und Uhrzeit, Installationsdauer, Adresse in einem Bussystem (21), IO-Link Application specific tag, Betriebsmittelkennzeichnung, Portbelegung, Portkonfiguration, Temperatur, Luftfeuchtigkeit, Beschleunigung, Emissionen, aktueller Projektstand bei der Montage, Planabweichung und/oder Grund.

11. Das Verfahren (100) nach einem der vorhergehenden Ansprüche, wobei anhand des Identifikators (11) eine Konfiguration der Komponente (4) durchgeführt wird, um die Komponente (4) von einem basiskonfigurierten Zustand in einen Zustand mit erweiterter Konfiguration zur funktionellen Ansteuerung durch die Steuerungsvorrichtung (8) überführt wird.

12. Das Verfahren nach einem der vorhergehenden Ansprüche, wobei der Identifikator (11) eine Kennung und/oder einen Typ der Komponente (4) und/oder mindestens eine technische Eigenschaft der Komponente (4) umfasst.

13. Das Verfahren nach einem der vorhergehenden Ansprüche, wobei die Auswertung zum Auswählen des wenigstens einen Installationsorts (201) den nachfolgenden weiteren Verfahrensschritt umfasst:
Simulieren der technischen Eigenschaften der Komponente (4) des wenigstens einen ausgewählten Installationsorts (201) hinsichtlich eines Einflusses auf eine in der Installationsvorgabe (200) spezifizierten Funktionalität, wodurch ein Ergebnis der Simulation hinsichtlich einer Eignung und/oder Funktionsfähigkeit der Komponente (4) für den ausgewählten Installationsort (201) bereitgestellt wird;
wobei das Initiieren einer Ausgabe wenigstens einer Installationsinformation den nachfolgenden Schritt umfasst:
Initiieren einer Ausgabe einer Handlungsempfehlung als ein Vorschlag für den Benutzer, eine alternative Komponente (4) an dem wenigstens einen ausgewählten Installationsort (201) auf Basis des Ergebnisses des Simulierens zu montieren.

14. Ein Computerprogramm (20), umfassend Befehle, die bei der Ausführung des Programms durch einen Computer (30) diesen veranlassen, die Schritte des Verfahrens (100) nach einem der Ansprüche 1 bis 13 auszuführen.

15. Eine Vorrichtung (30) zur Datenverarbeitung, umfassend Mittel zur Ausführung der Schritte des Verfahrens (100) nach einem der Ansprüche 1 bis 13.

## Claims

1. A method (100) for a computer-aided installation of spatially decentralized components (4) of a machine (1), comprising:
Receiving (101) an identifier (11) of a component (4),
Providing (102) an installation specification (200), which specifies an assignment of the component (4) to one or more installation locations (201) of the machine (1);
Identifying (103) at least one installation suggestion for the installation of the component (4) based on the provided installation specification (200) and the received identifier (11), wherein the installation location (201) or the plurality of installation locations (201) are selected based on an evaluation, wherein the selected installation location (201) or the plurality of selected installation locations (201) are indicated by the at least one installation suggestion; and
Initiating (104) an output of at least one installation information based on the at least one identified installation suggestion,
wherein identifying (103) the at least one installation suggestion comprises the following steps:
Determining at least one technical property of the component (4) based on the received identifier (11);
Determining at least one technical requirement of the at least one installation location (201) for the component (4) based on the installation specification (200) provided;
Performing the evaluation, in which it is compared whether the at least one technical property of the component (4) fulfills the at least one technical requirement for the respective installation location (201);
Selecting the installation location(s) (201) for which the fulfillment of the requirement is determined.

2. The method (100) according to claim 1, wherein the at least one installation information comprises an installation instruction for assisting a user in the installation, wherein initiating (104) the output comprises at least one of the following steps:
Initiating a display of the at least one selected installation location (201) for the component (4) on a user interface (32) of a computer (31), wherein the user interface (32) visualizes a digital twin of at least a part of the machine (1), and visualizes a topology and/or a mechanical and/or an electrical connection diagram of the part of the machine (1);
Initiating a display of the at least one selected installation location (201) of the component (4) by means of augmented reality;
Initiating an output of the installation instruction as an instruction for the user to use a desired installation location (201) from a list of the plurality of selected installation locations (201) for the installation and/or to mount the component (4) at the installation location (201);
Initiating an acoustic output of the installation instruction;
Initiating a graphical display of the installation instruction,
Initiating a graphical display of a list of the multiple selected installation locations (201) based on the installation suggestion.

3. The method (100) according to any one of the preceding claims, wherein the at least one installation information is used for the computer-aided installation at least in that the installation information comprises an indication of the at least one installation location (201) at which a connection of the component (4) to a further component (4) and/or an installation element (10) such as a cable is possible, wherein the method (100) comprises the following further step:
Detecting a connection state of the component (4) to determine whether the connection has been established, wherein detecting the connection state comprises
Receiving an installation message based on an input from the user and/or from the component (4),
where the received installation message indicates that the connection of the component (4) has been established.

4. The method (100) according to any one of the preceding claims, wherein the method (100) comprises the following further steps:
Verifying the selected installation location (201) of the component (4) based on the received identifier (11) and the installation specification (200), wherein a marking for the installation specification (200) is stored depending on the verification, and the subsequent step is carried out in the event of a positive verification:
Storing the marking of the installation location (201) as the correctly selected installation location (201) in the installation specification (200);
whereby at least one of the following steps is carried out in the event of a negative verification:
Storing a marking of the installation location (201) as a changed selected installation location (201) in the installation specification (200), and:
Initiating a correction of the selected installation location (201) according to the installation specification (200).

5. The method (100) according to any one of the preceding claims, wherein the at least one installation information comprises an installation instruction for assisting a user in a reconstruction of the machine (1), wherein initiating the output comprises at least the following step:
Initiating an output of an installation sequence by means of the at least one installation information for the installation of the machine (1).

6. The method (100) according to one of the preceding claims, wherein the installation information comprises an installation configuration and/or an installation documentation, for a disassembly and/or a reconstruction of the machine (1), which is stored in a data memory (33) and/or transmitted to the component (4).

7. The method (100) according to any one of the preceding claims, wherein the requirement is a requirement for the installation, for a connection of the component (4) at the at least one installation location (201).

8. The method (100) according to any one of the preceding claims, wherein the following step is provided:
Selecting the installation location or locations (201) for which only a partial fulfillment of the requirement is determined, wherein an installation instruction is generated with an indication of actions and/or instructions to nevertheless perform the installation of the component (4) at the installation location (201); and/or
whereby a ranking list of the selected installation locations (201) is determined depending on the comparison.

9. The method (100) according to claim 8, wherein determining the at least one technical property of the component (4) further comprises:
Reading the technical property from a database; and/or
wherein the determination of the at least one technical requirement comprises:
Determining a marking in the installation specification (200), the marking correlating with predetermined technical properties;
Reading the specified technical properties from a database using the marking to determine the technical requirements;
wherein the method (100) comprises at least one of the following further steps:
Generating a further identifier for the component (4) to indicate that the specific component (4) has been installed at the installation location (201);
Extending the installation specification (200) by the identifier (11) and/or by a further specification of the component (4) assigned to the selected installation location (201), which is used for the installation of the component (4) by a user.

10. The method (100) according to any of the preceding claims, wherein at least one of the following specifications is received to create a digital twin of the component (4) based on the received identifier (11) and the selected installation location (201): Component type, machine type, plant type, user, designation, name, station name, timestamp such as date and time, installation duration, address in a bus system (21), IO-Link application specific tag, equipment identifier, port assignment, port configuration, temperature, humidity, acceleration, emissions, current project status at installation, deviation from plan and/or reason.

11. The method (100) according to one of the preceding claims, wherein a configuration of the component (4) is performed based on the identifier (11) in order to transfer the component (4) from a base-configured state to a state with extended configuration for functional actuation by means of the control device (8).

12. The method according to any one of the preceding claims, wherein the identifier (11) comprises an identifier and/or a type of the component (4) and/or at least one technical property of the component (4).

13. The method according to any one of the preceding claims, wherein the evaluation for selecting the at least one installation location (201) comprises the following further method step:
Simulating the technical characteristics of the component (4) of the at least one selected installation location (201) with respect to an influence on a functionality specified in the installation specification (200), thereby providing a result of the simulation with respect to a suitability and/or operability of the component (4) for the selected installation location (201); wherein initiating an output of at least one installation information comprises the following step:
Initiating an output of a recommended action as a suggestion for the user to mount an alternative component (4) at the at least one selected installation location (201) based on the result of the simulation.

14. A computer program (20), comprising instructions which, when the program is executed by a computer (30), cause the computer to perform the steps of the method (100) according to any one of claims 1 to 13.

15. An apparatus (30) for data processing, comprising means for performing the steps of the method (100) according to any one of claims 1 to 13.

## Revendications

1. Procédé (100) permettant l'installation assistée par ordinateur de composants (4) agencés de manière décentralisée dans l'espace d'une machine (1) comprenant :
la réception (101) d'un identifiant (11) d'un composant (4),
la mise à disposition (102) d'une consigne d'installation (200) qui spécifie une association du composant (4) avec un ou plusieurs emplacements d'installation (201) de la machine (1) ;
l'identification (103) d'au moins une proposition d'installation pour l'installation du composant (4) sur la base de la consigne d'installation mise à disposition (200) et de l'identifiant reçu (11), dans lequel l'emplacement d'installation (201) ou la pluralité d'emplacements d'installation (201) sont sélectionnés sur la base d'une évaluation, dans lequel, par l'au moins une proposition d'installation, l'emplacement d'installation sélectionné (201) ou la pluralité d'emplacements d'installation sélectionnés (201) sont indiqués ; et
l'initiation (104) d'une sortie d'au moins une information d'installation basée sur l'au moins une proposition d'installation identifiée, dans lequel l'identification (103) de l'au moins une proposition d'installation comprend les étapes suivantes :
la détermination d'au moins une propriété technique du composant (4) sur la base de l'identifiant (11) reçu ;
la détermination d'au moins une exigence technique de l'au moins un emplacement d'installation (201) pour le composant (4) sur la base de la consigne d'installation (200) mise à disposition ;
l'exécution de l'évaluation, lors de laquelle on compare si, pour l'emplacement d'installation respectif (201), l'au moins une propriété technique du composant (4) satisfait à l'au moins une exigence technique ;
la sélection dudit ou des emplacements d'installation (201) pour lesquels la conformité à l'exigence est établie.

2. Procédé (100) selon la revendication 1, l'au moins une information d'installation comprenant une instruction d'installation pour aider un utilisateur dans l'installation, l'initiation (104) de la sortie comprenant au moins une des étapes suivantes :
initiation d'un affichage dudit au moins un emplacement d'installation sélectionné (201) pour ledit composant (4) sur une interface utilisateur (32) d'un ordinateur (31), ladite interface utilisateur (32) visualisant un jumeau numérique d'au moins une partie de la machine (1), et visualisant une topologie et/ou un schéma de connexion mécanique et/ou électrique de ladite partie de la machine (1) ;
initiation d'un affichage de l'au moins un emplacement d'installation sélectionné (201) du composant (4) au moyen de la réalité augmentée ;
initiation d'une sortie de l'instruction d'installation en tant qu'instruction pour l'utilisateur d'utiliser un emplacement d'installation souhaité (201) parmi une liste de la pluralité d'emplacements d'installation sélectionnés (201) pour l'installation et/ou de monter le composant (4) à l'emplacement d'installation (201) ;
initiation d'une sortie sonore des instructions d'installation ;
initiation d'un affichage graphique des instructions d'installation,
initiation d'un affichage graphique d'une liste de plusieurs emplacements d'installation sélectionnés (201) sur la base de la proposition d'installation.

3. Procédé (100) selon l'une des revendications précédentes, l'au moins une information d'installation étant utilisée pour l'installation assistée par ordinateur au moins en ce que l'information d'installation comprend une indication de l'au moins un emplacement d'installation (201) dans lequel une connexion du composant (4) à un autre composant (4) et/ou à un élément d'installation (10) tel qu'un câble est possible, le procédé (100) comprenant l'étape supplémentaire suivante :
détection d'un état de connexion du composant (4) pour déterminer si la connexion a été établie, la détection de l'état de connexion comprenant :
réception d'un message d'installation sur la base d'une entrée de l'utilisateur et/ou du composant (4),
le message d'installation reçu indiquant que la connexion du composant (4) a été établie.

4. Procédé (100) selon l'une des revendications précédentes, dans lequel le procédé (100) comprend les étapes supplémentaires suivantes :
vérification de l'emplacement d'installation (201) sélectionné du composant (4) sur la base de l'identifiant (11) reçu et de la consigne d'installation (200), un marquage étant enregistré pour la consigne d'installation (200) en fonction de la vérification, et l'étape suivante étant exécutée en cas de vérification positive :
enregistrement de l'identification de l'emplacement d'installation (201) comme emplacement d'installation correctement sélectionné (201) dans la consigne d'installation (200) ;
en cas de vérification négative, au moins l'une des étapes suivantes étant exécutée :
enregistrement d'une identification de l'emplacement d'installation (201) en tant qu'emplacement d'installation sélectionné modifié (201) dans la consigne d'installation (200), et :
initiation d'une correction de l'emplacement d'installation sélectionné (201) conformément à la consigne d'installation (200).

5. Procédé (100) selon l'une des revendications précédentes, ladite au moins une information d'installation comprenant une instruction d'installation pour aider un utilisateur à remonter la machine (1), l'initiation de la sortie comprenant au moins l'étape suivante :
initiation d'une sortie d'un ordre d'installation au moyen de l'au moins une information d'installation pour l'installation de la machine (1).

6. Procédé (100) selon l'une des revendications précédentes, l'information d'installation comprenant une configuration d'installation et/ou une documentation d'installation, pour un démontage et/ou un remontage de la machine (1), qui est enregistrée dans une mémoire de données (33) et/ou transmise au composant (4).

7. Procédé (100) selon l'une des revendications précédentes, l'exigence étant une exigence pour l'installation, pour une connexion du composant (4) à l'au moins un emplacement d'installation (201).

8. Procédé (100) selon l'une des revendications précédentes, l'étape suivante étant prévue :
sélection dudit ou des emplacements d'installation (201) pour lesquels la satisfaction de l'exigence n'est que partiellement constatée, une instruction d'installation étant générée avec une indication d'actions et/ou d'indications pour effectuer néanmoins l'installation du composant (4) à l'emplacement d'installation (201) ; et/ou
en fonction de la comparaison, un classement des emplacements d'installation sélectionnés (201) étant déterminé.

9. Procédé (100) selon la revendication 8, la détermination de ladite au moins une propriété technique du composant (4) comprenant en outre :
la lecture de la propriété technique à partir d'une base de données ; et/ou la détermination de l'au moins une exigence technique comprenant :
la détermination d'un marquage dans la consigne d'installation (200), le marquage étant en corrélation avec des propriétés techniques prédéterminées ;
la lecture des propriétés techniques prédéfinies à l'aide du marquage dans une base de données afin de déterminer les exigences techniques ;
le procédé (100) comprenant au moins l'une des étapes supplémentaires suivantes : la génération d'un autre identifiant pour le composant (4) afin d'indiquer que le composant concret (4) a été installé sur l'emplacement d'installation (201) ;
l'extension de la consigne d'installation (200) par l'identifiant (11) et/ou par une autre spécification du composant (4), associée à l'emplacement d'installation sélectionné (201), qui est utilisé pour l'installation du composant (4) par un utilisateur.

10. Procédé (100) selon l'une des revendications précédentes, au moins l'une des spécifications suivantes étant reçue pour créer un jumeau numérique du composant (4) sur la base de l'identifiant reçu (11) et de l'emplacement d'installation sélectionné (201) : type de composant, type de machine, type d'installation, utilisateur, désignation, nom, nom de station, horodatage tel que date et heure, durée d'installation, adresse dans un système de bus (21), balise IO-Link spécifique à l'application, identification du matériel d'exploitation, occupation des ports, configuration des ports, température, humidité, accélération, émissions, état actuel du projet lors du montage, écart par rapport au plan et/ou raison.

11. Procédé (100) selon l'une des revendications précédentes, une configuration du composant (4) étant réalisée à partir de l'identifiant (11) pour faire passer le composant (4) d'un état configuré de base à un état de configuration étendue pour une commande fonctionnelle par le dispositif de commande (8).

12. Procédé selon l'une des revendications précédentes, dans lequel l'identifiant (11) comprend un identifiant et/ou un type du composant (4) et/ou au moins une propriété technique du composant (4).

13. Procédé selon l'une des revendications précédentes, l'évaluation pour sélectionner ledit au moins un emplacement d'installation (201) comprenant l'étape de procédé supplémentaire suivante :
la simulation des propriétés techniques du composant (4) de l'au moins un emplacement d'installation sélectionné (201) en ce qui concerne une influence sur une fonctionnalité spécifiée dans la consigne d'installation (200), fournissant ainsi un résultat de la simulation en ce qui concerne une adéquation et/ou une capacité de fonctionnement du composant (4) pour l'emplacement d'installation sélectionné (201) ;
l'initiation d'une sortie d'au moins une information d'installation comprenant l'étape suivante :
l'initiation d'une sortie d'une recommandation d'action en tant que suggestion pour l'utilisateur de monter un composant alternatif (4) à l'au moins un emplacement d'installation sélectionné (201) sur la base du résultat de la simulation.

14. Programme informatique (20) comprenant des instructions qui, lorsque le programme est exécuté par un ordinateur (30), amènent ce dernier à exécuter les étapes du procédé (100) selon l'une des revendications 1 à 13.

15. Dispositif (30) de traitement de données comprenant des moyens pour mettre en aeuvre les étapes du procédé (100) selon l'une des revendications 1 à 13.
